# EUROPEAN PATENT SPECIFICATION

(11) **EP 4 223 038 B1**
(45) Date of publication and mention of the grant of the patent: **04.03.2026**
(21) Application number: 20955660.4
(22) Date of filing: 30.09.2020
(51) Int. Cl.: H04W 72/04, H04B 7/02

(54) **DEFAULT PATHLOSS REFERENCE SIGNALS FOR MULTI-PANEL UPLINK TRANSMISSIONS**
STANDARDPFADVERLUSTREFERENZSIGNALE FÜR MEHRTAFEL-UPLINK-ÜBERTRAGUNGEN
SIGNAUX DE RÉFÉRENCE DE PERTE DE TRAJET PAR DÉFAUT POUR TRANSMISSIONS EN LIAISON MONTANTE MULTI-PANNEAU

(43) Date of publication of application: 09.08.2023
(73) Proprietor: QUALCOMM INCORPORATED, San Diego, California 92121-1714 (US)
(72) Inventor: YUAN, Fang, San Diego, California 92121-1714 (US); ZHOU, Yan, San Diego, California 92121-1714 (US); NAM, Wooseok, San Diego, California 92121-1714 (US); LUO, Tao, San Diego, California 92121-1714 (US)
(74) Representative: Bardehle Pagenberg Partnerschaft mbB Patentanwälte Rechtsanwälte
(86) International application number: PCT/CN2020/119286
(87) International publication number: WO 2022/067635

(56) References cited:
- WO-A1-2020/034442
- WO-A1-2020/037207
- CN-A- 110 475 334
- CN-A- 110 972 251
- US-A1- 2020 053 724
- "3rd Generation Partnership Project; Technical Specification Group Radio Access Network; NR; Physical layer procedures for control (Release 16)", vol. RAN WG1, no. V16.2.0, 20 July 2020 (2020-07-20), pages 1 - 176, XP051925548, Retrieved from the Internet <URL:ftp://ftp.3gpp.org/Specs/archive/38_series/38.213/38213-g20.zip 38213-g20.docx> [retrieved on 20200720]
- LENOVO, MOTOROLA MOBILITY: "Remaining issues on multi-TRP/panel transmission", 3GPP DRAFT; R1-2003819, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 15 May 2020 (2020-05-15), Mobile Competence Centre ; 650, route des Lucioles ; F-06921 Sophia-Antipolis Cedex ; France , XP051885590

## Description

### FIELD OF TECHNOLOGY

The following relates to wireless communications, including default pathloss reference signals for multi-panel uplink transmissions.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM).

A wireless multiple-access communications system may include one or more base stations or one or more network access nodes, each simultaneously supporting communication for multiple communication devices, which may be otherwise known as user equipment (UE). A UE may transmit reference signals to a base station. In some cases, however, reference signal resources for the reference signals may be unknown to the UE.
WO 2020/037207 A1 discloses methods and apparatus for beam management for multi-TRP. A WTRU may include a plurality of antenna panels, each antenna panel comprising a plurality of antennas configured to transmit on directional transmit (TX) beams. The WTRU may send, to a transmission reception point (TRP), antenna panel capability information for the plurality of antenna panels and receive a reference signal (RS) configuration for configuring RS resource sets. The WTRU may send an RS transmission trigger frame identifying triggered RS resource sets from the configured RS resource sets. The WTRU may identify a set of antenna panels to be used with the triggered RS resource sets. The WTRU may determine an UL TX beam sweeping mode and an association between the triggered RS resources sets and the set of antenna panels. The WTRU may perform UL beam sweeping using the triggered RS resource sets and associated set of antenna panels.
WO 2020/034442 A1 discloses methods, systems, and devices for multi-beam power control and detecting link recovery confirmation information. A method for wireless communication includes determining an association between a set of parameters and a plurality of beams; and performing, by a terminal and based on the association, one or more uplink transmissions, where the set of parameters comprises at least one of the following parameters: one or more open loop parameters, one or more closed loop parameters, one or more transmit power control (TPC) commands or one or more path loss reference signal (PL-RS) parameters.
ETSI TS 138 213 V16.2.0 (2020-07) discloses physical layer procedures for control in 5G NR.
3GPP Tdoc R1-2003819, "Remaining issues on multi-TRP/panel transmission", was contributed by Lenovo, Motorola Mobility at the 3GPP TSG RAN WG1 Meeting #101, May 25th- June 5th, 2020.

### SUMMARY

The invention is defined by the independent claims. The described techniques relate to improved methods, systems, devices, and apparatuses that support default pathloss reference signals for multi-panel uplink transmissions. Generally, the described techniques provide for reducing signaling overhead and default resource selection schemes for default pathloss refence signal (PLRS) transmissions, including the determination of default PLRS resources for multitransmission/ reception point (TRP) transmissions. In some examples, a user equipment (UE) may use a first antenna panel for a first transmission to a first TRP and a second antenna panel for transmitting a second transmission to a second, different TRP. The UE may determine a set of default PLRS resources for one or more PLRSs that are associated with the first transmission and the second transmission of an uplink signal (e.g., data over a physical uplink shared channel (PUSCH), control information over a physical uplink control channel (PUCCH), a sounding reference signal (SRS), or the like), where the default PLRS resources may be determined based on TRP indexes, whether the UE is configured with PLRS resources, and one or more rules. For example, the UE may identify respective TRP index values corresponding to the first TRP and the second TRP, where the UE is configured (e.g., via one or more downlink control information (DCI)) for at least a first transmission of an uplink signal to the first TRP using the first antenna panel and a second transmission of the uplink signal to the second TRP using a second antenna panel. That is, the multi-panel transmissions by the UE may include uplink transmissions to two or more TRPs using respective antenna panels (e.g., antenna arrays) at the UE. The UE may determine the default PLRS resources for one or more PLRSs that are associated with the first transmission and the second transmission of the uplink signal. In such cases, the UE may determine whether PLRSs are configured, and if so, whether additional signaling or configurations indicate which PLRS resources to use. The UE may further identify the respective TRP index values of the TRPs receiving the uplink transmissions, and the UE may use a resource selection rule for selecting default PLRS resources, where the resource selection rule may be based on various configurations or parameters available to the UE for selecting the default PLRS resources. The UE may transmit the one or more PLRSs using the default PLRS resources.

A method of wireless communication at a UE is described. The method may include identifying respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel, determining default PLRS resources for one or more PLRSs that are associated with the first transmission and the second transmission of the uplink signal, the default PLRS resources being based on a determination of whether PLRSs are configured, the respective TRP index values, and a resource selection rule, and transmitting the one or more PLRSs using the default PLRS resources.

An apparatus for wireless communication at a UE is described. The apparatus may include a processor, memory coupled with the processor, and instructions stored in the memory. The instructions may be executable by the processor to cause the apparatus to identify respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel, determine default PLRS resources for one or more PLRSs that are associated with the first transmission and the second transmission of the uplink signal, the default PLRS resources being based on a determination of whether PLRSs are configured, the respective TRP index values, and a resource selection rule, and transmit the one or more PLRSs using the default PLRS resources.

Another apparatus for wireless communication at a UE is described. The apparatus may include means for identifying respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel, determining default PLRS resources for one or more PLRSs that are associated with the first transmission and the second transmission of the uplink signal, the default PLRS resources being based on a determination of whether PLRSs are configured, the respective TRP index values, and a resource selection rule, and transmitting the one or more PLRSs using the default PLRS resources.

A non-transitory computer-readable medium storing code for wireless communication at a UE is described. The code may include instructions executable by a processor to identify respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel, determine default PLRS resources for one or more PLRSs that are associated with the first transmission and the second transmission of the uplink signal, the default PLRS resources being based on a determination of whether PLRSs are configured, the respective TRP index values, and a resource selection rule, and transmit the one or more PLRSs using the default PLRS resources.

According to the invention, in the method, apparatuses, and non-transitory computer-readable medium described herein, determining the default PLRS resources may include operations, features, means, or instructions for determining that the PLRSs is configured via radio resource control signaling, determining that downlink control information or additional radio resource control signaling associated with the respective TRP index values excludes configuration information for transmitting the one or more default PLRSs, and selecting the default PLRS resources in accordance with the resource selection rule and the respective TRP index values based on the PLRSs being configured and the configuration information being excluded.

In some examples of the method, apparatuses, and non-transitory computer-readable medium described herein, selecting the default PLRS resources in accordance with the resource selection rule may include operations, features, means, or instructions for identifying PLRS identifier values associated with the respective TRP index values, and selecting the default PLRS resources based on the PLRS identifier values, where the selected default PLRS resources include resources of a serving cell.

In some examples of the method, apparatuses, and non-transitory computer-readable medium described herein, each of the PLRS identifier values includes a lowest PLRS identifier value associated with the respective TRP index values.

In some examples of the method, apparatuses, and non-transitory computer-readable medium described herein, selecting the default PLRS resources in accordance with the resource selection rule may include operations, features, means, or instructions for identifying a set of control resource sets for monitoring for the downlink control information, identifying control resource sets from the set of control resource sets having control resource set pool index values associated with the respective TRP index values, and selecting the default PLRS resources based on the control resource set pool index values, where the default PLRS resources include periodic resources that may be selected based on a spatial quasi co-location relationship associated with the identified control resource sets.

In some examples of the method, apparatuses, and non-transitory computer-readable medium described herein, the control resource sets having the control resource set pool index values associated with the respective TRP index values may be in an active downlink part of a scheduling cell.

In some examples of the method, apparatuses, and non-transitory computer-readable medium described herein, the control resource sets having the control resource set pool index values associated with the respective TRP index values may be in an active downlink part of a primary cell, and where the configuration information excluded from the downlink control information includes spatial beam information on an active uplink bandwidth part of the primary cell.

Some examples of the method, apparatuses, and non-transitory computer-readable medium described herein may further include operations, features, means, or instructions for determining that the configuration information excluded from the downlink control information includes sounding reference signal resource indicator fields associated with the respective TRP index values, where selecting the default PLRS resources in accordance with the resource selection rule includes: identifying a mapping between power control identifier values and PLRS identifier values that are associated with the respective TRP index values, and selecting the default PLRS resources based at least in part on the PLRS identifier values and in accordance with the mapping.

In some examples of the method, apparatuses, and non-transitory computer-readable medium described herein, the downlink control information may be part of a multiple downlink control information scheme for scheduling the first transmission and the second transmission of the uplink signal.

Some examples of the method, apparatuses, and non-transitory computer-readable medium described herein may further include operations, features, means, or instructions for determining that the configuration information excluded from the additional radio resource control signaling includes uplink configured grant parameters, a format of the downlink control information activating the first transmission and the second transmission of the uplink signal, where selecting the default PLRS resources in accordance with the resource selection rule includes: identifying a mapping between sounding reference signal resource indicator fields associated with the respective TRP index values and PLRS indicator values, and selecting the default PLRS resources based at least in part on the PLRS identifier values and in accordance with the mapping, wherein the selected default PLRS resources comprise resources of a serving cell.

In some examples of the method, apparatuses, and non-transitory computer-readable medium described herein, the downlink control information may be part of a single downlink control information scheme for scheduling the first transmission and the second transmission of the uplink signal.

Some examples of the method, apparatuses, and non-transitory computer-readable medium described herein may further include operations, features, means, or instructions for determining that the configuration information excluded from the additional radio resource control signaling includes one or more configured grant parameters, a format of the downlink control information activating the first transmission and the second transmission of the uplink signal, where selecting the default PLRS resources in accordance with the resource selection rule includes: identifying PLRS identifier values associated with the respective TRP index values, and selecting the default PLRS resources based at least in part on the PLRS identifier values, wherein the selected default PLRS resources comprise resources of a serving cell.

In some examples of the method, apparatuses, and non-transitory computer-readable medium described herein, the downlink control information may be part of a single downlink control information scheme for scheduling the first transmission and the second transmission of the uplink signal.

In some examples of the method, apparatuses, and non-transitory computer-readable medium described herein, determining the default PLRS resources may include operations, features, means, or instructions for determining that the PLRSs may be not configured via radio resource control signaling, determining that downlink control information excludes configuration information for transmitting the one or more default PLRSs, the configuration information including sounding reference signal resource indicator fields, and selecting the default PLRS resources in accordance with the resource selection rule and the respective TRP index values based on the PLRSs not being configured and the configuration information being excluded.

In some examples of the method, apparatuses, and non-transitory computer-readable medium described herein, selecting the default PLRS resources in accordance with the resource selection rule may include operations, features, means, or instructions for identifying a set of control resource sets for monitoring for the downlink control information, where the downlink control information may be part of a multiple downlink control information scheme for scheduling the first transmission and the second transmission of the uplink signal, identifying control resource sets from the set of control resource sets having control resource set pool index values associated with the respective TRP index values, where the identified control resource sets may be within an active downlink bandwidth part, and selecting the default PLRS resources based on the control resource set pool index values, where the default PLRS resources include periodic resources that may be selected based on a spatial quasi co-location relationship associated with the identified control resource sets.

In some examples of the method, apparatuses, and non-transitory computer-readable medium described herein, selecting the default PLRS resources in accordance with the resource selection rule may include operations, features, means, or instructions for identifying a set of transmission configuration indicator states for a physical downlink shared channel, where the downlink control information may be part of a multiple downlink control information scheme for scheduling the first transmission and the second transmission of the uplink signal, identifying, from the set of transmission configuration indicator states, transmission configuration identifiers associated with the respective TRP index values, and selecting the default PLRS resources based on the transmission configuration identifiers, where control resource sets associated with the respective TRP index values may be in a downlink bandwidth part that may be different from an active downlink bandwidth part.

In some examples of the method, apparatuses, and non-transitory computer-readable medium described herein, selecting the default PLRS resources in accordance with the resource selection rule may include operations, features, means, or instructions for identifying a set of transmission configuration indicator states for a physical downlink shared channel, where the downlink control information may be part of a single downlink control information scheme for scheduling the first transmission and the second transmission of the uplink signal, identifying, from the set of transmission configuration indicator states, transmission configuration identifiers associated with the respective TRP index values, where each of the transmission configuration identifiers may be within a transmission configuration indicator codepoint for a pair of transmission configuration indicator states, and selecting the default PLRS resources based on the transmission configuration identifiers, where control resource sets associated with the respective TRP index values may be in a downlink bandwidth part that may be different from an active downlink bandwidth part.

In some examples of the method, apparatuses, and non-transitory computer-readable medium described herein, the transmission configuration identifiers may have a lowest value of the transmission configuration indicator codepoint for the pair of transmission configuration indicator states.

In some examples of the method, apparatuses, and non-transitory computer-readable medium described herein, selecting the default PLRS resources in accordance with the resource selection rule may include operations, features, means, or instructions for identifying a set of control resource sets for monitoring for the downlink control information, where the downlink control information may be part of a single downlink control information scheme for scheduling the first transmission and the second transmission of the uplink signal, identifying control resource sets from the set of control resource sets having control resource set pool index values associated with the respective TRP index values, where the identified control resource sets may be within an active downlink bandwidth part, and selecting the default PLRS resources based on the control resource set pool index values, where the default PLRS resources include periodic resources that may be selected based on a spatial quasi co-location relationship associated with the identified control resource sets.

In some examples of the method, apparatuses, and non-transitory computer-readable medium described herein, determining the default PLRS resources may include operations, features, means, or instructions for determining that the PLRSs may be configured via radio resource control signaling, determining that additional radio resource control signaling associated with the respective TRP index values excludes configuration information for transmitting the one or more default PLRSs, the configuration information including spatial relationship information, and selecting the default PLRS resources in accordance with the resource selection rule and the respective TRP index values based on the PLRSs being configured and the configuration information being excluded, where selecting the default PLRS resources in accordance with the resource selection rule includes: identifying PLRS identifier values associated with the respective TRP index values, and selecting the default PLRS resources based at least in part on the PLRS identifier values, wherein the selected default PLRS resources comprise resources of a serving cell.

In some examples of the method, apparatuses, and non-transitory computer-readable medium described herein, determining the default PLRS resources may include operations, features, means, or instructions for determining that the PLRSs may be not configured via radio resource control signaling, determining that additional radio resource control signaling associated with the respective TRP index values excludes configuration information for transmitting the one or more default PLRSs, the configuration information including spatial relationship information, and selecting the default PLRS resources in accordance with the resource selection rule and the respective TRP index values based on the PLRSs not being configured and the configuration information being excluded, where selecting the default PLRS resources in accordance with the resource selection rule includes: identifying a plurality of control resource sets for monitoring for downlink control information, identifying control resource sets from the set of control resource sets having control resource set pool index values associated with the respective TRP index values, and selecting the default PLRS resources based on the control resource set pool index values, where the default PLRS resources include periodic resources that may be selected based on a spatial quasi co-location relationship associated with the identified control resource sets.

In some examples of the method, apparatuses, and non-transitory computer-readable medium described herein, determining the default PLRS resources may include operations, features, means, or instructions for determining that the PLRSs may be not configured via radio resource control signaling, determining that additional radio resource control signaling associated with the respective TRP index values excludes configuration information for transmitting the one or more default PLRSs, the configuration information for sounding reference signals associated with the respective TRP index values, and selecting the default PLRS resources in accordance with the resource selection rule and the respective TRP index values based on the PLRSs not being configured and the configuration information being excluded, where selecting the default PLRS resources in accordance with the resource selection rule includes: identifying a synchronization signal block used to receive a master information block associated with the respective TRP index values, and selecting the default PLRS resources based at least in part on the identified synchronization signal block.

In some examples of the method, apparatuses, and non-transitory computer-readable medium described herein, determining the default PLRS resources may include operations, features, means, or instructions for determining that one or more higher-layer parameters may have not been received at the UE, and selecting the default PLRS resources in accordance with the resource selection rule and the respective TRP index values based on the one or more higher-layer parameters not being received, where selecting the default PLRS resources in accordance with the resource selection rule includes: identifying a synchronization signal block used to receive a master information block associated with the respective TRP index values, and selecting the default PLRS resources based at least in part on the identified synchronization signal block.

In some examples of the method, apparatuses, and non-transitory computer-readable medium described herein, determining the default PLRS resources may include operations, features, means, or instructions for determining that the PLRSs may be not configured via radio resource control signaling, determining that additional radio resource control signaling associated with the respective TRP index values excludes configuration information for transmitting the one or more default PLRSs, the configuration information for sounding reference signals associated with the respective TRP index values, and selecting the default PLRS resources in accordance with the resource selection rule and the respective TRP index values based on the PLRSs not being configured and the configuration information being excluded.

In some examples of the method, apparatuses, and non-transitory computer-readable medium described herein, selecting the default PLRS resources in accordance with the resource selection rule may include operations, features, means, or instructions for identifying a set of control resource sets for monitoring for downlink control information, identifying control resource sets from the set of control resource sets having lowest control resource set pool index values associated with the respective TRP index values, where the identified control resource sets may be within an active downlink bandwidth part, and selecting the default PLRS resources based on the lowest control resource set pool index values, where the default PLRS resources include periodic resources that may be selected based on a spatial quasi co-location relationship associated with the identified control resource sets.

In some examples of the method, apparatuses, and non-transitory computer-readable medium described herein, selecting the default PLRS resources in accordance with the resource selection rule may include operations, features, means, or instructions for identifying a set of transmission configuration indicator states for a physical downlink shared channel, identifying, from the set of transmission configuration indicator states, transmission configuration identifiers associated with the respective TRP index values, and selecting the default PLRS resources based on the transmission configuration identifiers, where control resource sets associated with the respective TRP index values may be in a downlink bandwidth part that may be different from an active downlink bandwidth part.

In some examples of the method, apparatuses, and non-transitory computer-readable medium described herein, determining the default PLRS resources may include operations, features, means, or instructions for determining that the PLRSs may be not configured for the first transmission and the second transmission of the uplink signal, where the first transmission and the second transmission of the uplink signal may be based on downlink control information received in accordance with a single downlink control information scheme, and selecting the default PLRS resources in accordance with the resource selection rule and the respective TRP index values based on the PLRSs not being configured.

In some examples of the method, apparatuses, and non-transitory computer-readable medium described herein, selecting the default PLRS resources in accordance with the resource selection rule may include operations, features, means, or instructions for determining, for the first transmission of the uplink signal, a first set of periodic reference signal resources based on a first transmission configuration indicator identifier value from a first pair of transmission configuration indicators, determining, for the second transmission of the uplink signal, a second set of periodic reference signal resources based on a second transmission configuration indicator identifier value from a second pair of transmission configuration indicators, and selecting the default PLRS resources based on the first set of periodic reference signal resources and the second set of periodic reference signal resources.

In some examples of the method, apparatuses, and non-transitory computer-readable medium described herein, the first transmission configuration indicator identifier value may be a lowest transmission configuration indicator identifier value of the first pair of transmission configuration indicators, and where the second transmission configuration indicator identifier value may be a lowest transmission configuration indicator identifier value of the second pair of transmission configuration indicators.

In some examples of the method, apparatuses, and non-transitory computer-readable medium described herein, selecting the default PLRS resources in accordance with the resource selection rule may include operations, features, means, or instructions for determining, for the first transmission and the second transmission of the uplink signal, a set of periodic reference signal resources based on a pair of transmission configuration indicators from a set of pairs of transmission configuration indicators, and selecting the default PLRS resources based on the set of periodic reference signal resources.

In some examples of the method, apparatuses, and non-transitory computer-readable medium described herein, the pair of transmission configuration indicators may have a lowest sum of transmission configuration indicator identifier values, or may have a highest sum of transmission configuration indicator identifier values, or correspond to a first transmission configuration indicator codepoint having multiple transmission configuration indicator states.

In some examples of the method, apparatuses, and non-transitory computer-readable medium described herein, selecting the default PLRS resources in accordance with the resource selection rule may include operations, features, means, or instructions for determining, for the first transmission and the second transmission of the uplink signal, a first set of reference signal resources that may be based on single-panel transmissions and a second set of reference signal resources that may be based on a predefined mapping between the first set of reference signal resources and the second set of reference signal resources, and selecting the default PLRS resources based on the first set of reference signal resources, or the second set of reference signal resources, or any combination thereof.

In some examples of the method, apparatuses, and non-transitory computer-readable medium described herein, the predefined mapping may be based on one or more pairs of transmission configuration indicator states.

In some examples of the method, apparatuses, and non-transitory computer-readable medium described herein, the uplink signal includes data over a physical uplink shared channel, or control information over a physical uplink control channel, or a sounding reference signal.

### BRIEF DESCRIPTION OF THE DRAWINGS

FIG. 1 illustrates an example of a wireless communications system that supports default pathloss reference signals (PLRSs) for multi-panel uplink transmissions in accordance with aspects of the present disclosure.
FIGs. 2A and 2B illustrate examples of wireless communications systems that supports default PLRSs for multi-panel uplink transmissions in accordance with aspects of the present disclosure.
FIG. 3 illustrates an example of a process flow that supports default PLRSs for multi-panel uplink transmissions in accordance with aspects of the present disclosure.
FIGs. 4 and 5 show block diagrams of devices that support default PLRSs for multi-panel uplink transmissions in accordance with aspects of the present disclosure.
FIG. 6 shows a block diagram of a communications manager that supports default PLRSs for multi-panel uplink transmissions in accordance with aspects of the present disclosure.
FIG. 7 shows a diagram of a system including a device that supports default PLRSs for multi-panel uplink transmissions in accordance with aspects of the present disclosure.
FIGs. 8 through 10 show flowcharts illustrating methods that support default PLRSs for multi-panel uplink transmissions in accordance with aspects of the present disclosure.

### DETAILED DESCRIPTION

In some wireless communications systems, a user equipment (UE) may be configured to communicate with multiple transmission/reception points (TRPs) of one or more base stations. In such systems, communications with the multiple TRPs may be performed using different antenna panels (e.g., antenna arrays) at the UE, where different antenna panels may be used for communicating with different TRPs. Such communications schemes may be referred to as multi-TRP communications, multi-panel communications, mTRP, multi-TRP transmission and reception, multi-panel transmission and reception, or other similar terminology. The multi- TRP/multi-panel communications may be scheduled by one or more control signals received at a UE, which may include one downlink control information (DCI) that schedules respective communications using different antenna panels of the UE, or may include multiple (e.g., two) DCI that separately schedules the respective communications using the different antenna panels of the UE.

A UE may transmit various reference signals in a system, which may include various reference signals used for channel and link measurements and reference signals (e.g., a pathloss reference signal (PLRS)) used to determine some path loss or attenuation of one or more communication links (e.g., beams). A PLRS may be beam-specific and may be associated with other signals transmitted by the UE, such as data over a physical uplink shared channel (PUSCH), control information over a physical uplink control channel (PUCCH), a sounding reference signal (SRS), or other signaling and messages. In some cases, resources used for the transmission of one or more PLRSs for respective beams may be configured by the network. For example, the UE may receive an indication of PLRS resource configuration from a TRP of a base station, and the UE may transmit one or more PLRSs to one or more TRPs based on the PLRS resource configuration. In some cases, however, the UE may be unconfigured with the PLRS resources for a period of time, or the base station may refrain from configuring the UE with the PLRS resources to reduce signaling overhead. The lack of PLRS resources may prevent the UE from transmitting one or more PLRSs, which may degrade transmission quality or increase transmission latency.

Various aspects of the present disclosure provide techniques for determining PLRS resources (e.g., default PLRS resources and corresponding resource indexes) in the context of multiple TRP communications schemes. In some cases, a UE may be configured for transmitting an uplink signal (e.g., PUSCH, PUCCH, SRS) to multiple TRPs using different antenna panels. For example, the UE may receive one or more control messages (e.g., DCI, an uplink grant, etc.) from a TRP scheduling the uplink signal, and the UE may determine PLRS resources based on the control message. A TRP may transmit the control message to a UE, and the control message may indicate or be otherwise associated with a TRP index value corresponding to the TRP that transmitted the control message. In other cases, the control message may include or indicate information for the multiple TRPs, and TRP index values may be determined from the indicated information. In some examples, the UE may be configured with a plurality of PLRSs, and the UE may determine the default PLRS resources based on the plurality of configured PLRSs, the TRP index values, and a resource selection rule. In some additional or alternative examples, the UE may identify a plurality of control resource sets (CORESETs) and determine the PLRS resource based on the plurality of CORESETs, the TRP index values, and a resource selection rule. In some cases, the UE may determine a default PLRS resource for a TRP based on the lowest identifier of a configured PLRS that corresponds to the TRP, while in some other cases, the UE may determine a PLRS resource for a TRP based on the lowest index of a control resource set that corresponds to the TRP.

Such techniques may include identifying, at a UE that is configured for multiple transmissions of an uplink signal to multiple TRPs, multiple TRP index values corresponding to the multiple TRPs. The UE may determine default PLRS resources for one or more PLRSs that are associated with multiple transmissions of the uplink signal and transmit the one or more PLRSs using the default PLRS resources. In some cases, the UE may receive a control message from a first TRP and determine default PLRS resources for a first TRP and a second TRP based on the control message. In some other cases, the UE may receive a first control message from a first TRP and a second control message from a second TRP, and the UE may determine default PLRS resources for the first TRP based on the first control message and default PLRS resources for the second TRP based on the second control message. Determining PLRS resources for multiple TRPs, as described herein, may reduce signaling overhead and improve radio resource efficiency.

Aspects of the subject matter described herein may be implemented to realize one or more of the following potential improvements and advantages, among other benefits. Such techniques may, for example, provide benefits and enhancements to the operation of the UEs. For instance, the described techniques may provide for resource selections schemes when a UE is lacking an explicit configuration for reference signal resources. Such techniques may accordingly enable the efficient identification of reference signal resources, thereby ensuring the transmission of reference signals that may be used to improve and manage link quality and efficiency. In some examples, the described default resource selection schemes may reduce signaling overhead by reducing or limiting an amount of configurations provided to a UE such that the UE may continue to operate without such configurations (e.g., by falling back to the default resource selection schemes described herein). In some other examples, the selection of default PLRS resources may provide improvements to power consumption, increased data rates, and enhanced efficiency for high reliability and low latency operations, among other benefits provided by fortifying communication links against failures.

Aspects of the disclosure are initially described in the context of wireless communications systems. Aspects of the disclosure are then described in the context of a process flow. Aspects of the disclosure are further illustrated by and described with reference to apparatus diagrams, system diagrams, and flowcharts that relate to default pathloss reference signals for multi-panel uplink transmissions.

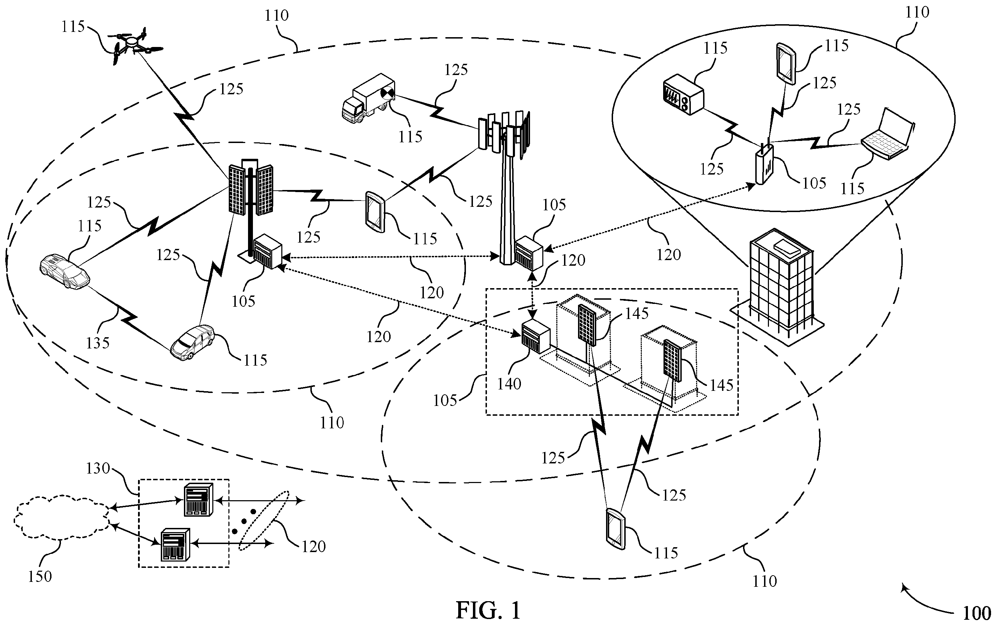

**FIG.** 1 illustrates an example of a wireless communications system 100 that supports default pathloss reference signals for multi-panel uplink transmissions in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing *(Δf)* and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*f*ₘₐₓ · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115. In some examples, one or more CORESETs may be associated with a particular pool index (e.g., a CORESETpoolindex value).

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, for example, in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

A quasi co-location (QCL) relationship between one or more transmissions or signals may refer to a relationship between the antenna ports (and the corresponding signaling beams) of the respective transmissions. For example, one or more antenna ports may be implemented by a base station 105 for transmitting at least one or more reference signals (such as a downlink reference signal, a synchronization signal block (SSB), or the like) and control information transmissions to a UE 115. However, the channel properties of signals sent via the different antenna ports may be interpreted (e.g., by a receiving device) to be the same (e.g., despite the signals being transmitted from different antenna ports), and the antenna ports (and the respective beams) may be determined to be quasi co-located (QCLed). In such cases, the UE 115-b may have respective antenna ports for receive beams used for receiving the QCLed transmissions (e.g., the reference signal). QCLed signals may enable the UE 115 to derive the properties of a first signal (e.g., delay spread, Doppler spread, frequency shift, average power, etc.) transmitted on a first antenna port from measurements made on a second signal transmitted via a second antenna port. Additionally or alternatively, two antenna ports may be said to be spatially QCLed, where the properties of a signal sent over a directional beam may be derived from the properties of a different signal over another, different directional beam.

Different types of QCL relationships may describe the relation between two different signals or antenna ports. For instance, QCL-TypeA may refer to a QCL relationship between signals including Doppler shift, Doppler spread, average delay, and delay spread. QCL-TypeB may refer to a QCL relationship including Doppler shift and Doppler spread, whereas QCL-TypeC may refer to a QCL relationship including Doppler shift and average delay. A QCL-TypeD may refer to a QCL relationship of spatial parameters, which may indicate a relation between two or more directional beams used to communicate signals. Here, the spatial parameters indicate that a first beam used to transmit a first signal may be similar (or the same) as another beam used to transmit a second, different, signal, or, that the same receive beam may be used to receive both the first and the second signal. Thus, the beam information for various beams may be derived through receiving signals from a transmitting device, where, in some cases, the QCL information or spatial information may help a receiving device efficient identify communications beams (e.g., without having to sweep through a large number of beams to identify the best beam (e.g., the beam having a highest signal quality)). In addition, QCL relationships may exist for both uplink and downlink transmissions and, in some cases, a QCL relationship may also be referred to as spatial relationship information.

In some examples, a transmission configuration indication (TCI) state configuration may include one or more parameters associated with a QCL relationship between transmitted signals. Here, a base station 105 may configure a QCL relationship, for example, that provides a mapping between a reference signal and antenna ports of another signal (e.g., a demodulation reference signal (DMRS) antenna port for PDCCH, a DMRS antenna port for a physical downlink shared channel (PDSCH), a CSI-RS antenna port for CSI-RS, or the like), and the TCI state may be indicated to the UE 115 by the base station 105. In such cases, the TCI state may be indicated via DCI (e.g., within a CORESET), and the QCL relationship associated with the TCI state (and further established through higher-layer parameters) may provide the UE 115 with the QCL relationship for respective antenna ports and signals transmitted by the base station 105. In some examples, TCI states may be indicated via a medium access control (MAC)-control element (CE).

A UE 115 may use the TCI information indicated in a MAC-CE (e.g., a control message) to determine one or more reference signal resources (e.g., pathloss reference signal (PLRS) resources). The MAC-CE may correspond to a CORESET (e.g., as indicated by a CORESET pool ID field) and indicate TCI state information for the corresponding CORESET. In some examples, the UE 115 may determine one reference signal resource from a MAC-CE, so the UE 115 may determine multiple reference signal resources for multiple TRPs based on multiple MAC-CEs. For example, the UE 115 may determine a first reference signal resource for a first TRP based on an active TCI state of a MAC-CE corresponding to a first TRP index (e.g., a MAC-CE corresponding to the same CORESET ID as the first TRP) and a second reference signal resource for a second TRP based on an active TCI state of a different MAC-CE corresponding to a second TRP index (e.g., a MAC-CE corresponding to the same CORESET ID as the second TRP).

In some other examples, the UE 115 may determine multiple reference signal resources corresponding to multiple TRPs from a MAC-CE. In such examples, the MAC-CE may indicate TCI state information corresponding to multiple to multiple TRP indexes (e.g., multiple set of TCI state information). In some cases, the MAC-CE may include TCI codepoints that indicate whether a TCI set includes TCI information corresponding to one TRP index or TCI information corresponding to two TCI indexes (e.g., a pair of TCI states). In some cases, a UE 115 may determine an uplink beam (e.g., a reference signal resources) based on an implicit or explicit indication of the uplink beam being QCLed with a downlink beam. The UE 115 may select the uplink beam as a default PLRS and transmit one or more reference signals to one or more TRPs via the uplink beam. In some cases, the UE 115 may transmit one or more uplink signal (e.g., PUCCHs, PUSCHs, SRSs) to one or more TRPs based on transmitting the one or more reference signals.

The uplink signals (e.g., PUCCHs, PUSCHs, SRSs) may be transmitted to the one or more TRPs using multiple transmission resources. In some cases, each transmission resource may be associated with one TRP. In some examples, the UE 115 may determine an association between transmission resources and a TRPs based on signal resource IDs (e.g., PUCCH resource IDs, PUSCH resource IDs, or SRS resource IDs) and a pre-determined rule. The pre-determined rule may, in some examples, split the signal resource IDs by the number of TRPs (e.g., for a two-TRP configuration, the first half of signal IDs are used for the first TRP and the second half of signal IDs are used for the second TRP). In another example, the UE 115 may determine the association between the transmission resources and a TRPs based on assigning or otherwise associating power control (PC) indexes (e.g., closed-loop PC) to the transmission resources. For example, the first and second closed-loop PC indexes may be assigned to the first and second TRP, respectively.

In a further example, the UE 115 may determine the association between the transmission resources and a TRPs based on an uplink resource group identifier (e.g., PUCCH group ID). The association may, in some examples, by determined based on a PUCCH group ID in the single spatial relation update per PUCCH group. For example, the first and the second PUCCH groups may be associated with the first and second TRP, respectively. In some other cases, each transmission resource may be associated with multiple TRPs. In some examples, the UE 115 may be configured in a multi-TRP mode (e.g., spatial division multiplexing (SDM), time division multiplexing (TDM), and/or frequency division multiplexing (FDM)), and the UE 115 may switch beams patterns (e.g., switch the transmission resources) based on a resource configuration (e.g., pre-configured resources) or indicated in a DCI. It should be understood that transmission resource associations described herein may apply to both single-DCI and multi-DCI based multi-TRP transmission. In some examples, a single-DCI muli-TRP may be identified based on TCI codepoint(s) mapping to two or more TCI states. In some other examples, a multi-DCI multi-TRP may be identified based on higher layer TRP index per CORESET is configured and is different across CORESETs in a "PDCCH-config." In a further example, an uplink signal (e.g., PUCCH, PUSCH, SRS) resource may be associated with a TRP index by either explicitly configuring a TRP index per uplink signal resource or implicitly by following the TRP index of a scheduling CORESET.

A UE 115 may identify respective TRP index values corresponding to a first TRP and a second TRP, where the UE 115 is configured for at least a first transmission of an uplink signal to the first TRP using a first antenna panel and a second transmission of the uplink signal to the second TRP using a second antenna panel different from the first antenna panel. The UE 115 may determine default PLRS resources for one or more PLRSs that are associated with the first transmission and the second transmission of the uplink signal, the default PLRS resources being based on a determination of whether PLRSs are configured, the respective TRP index values, and a resource selection rule. The UE 115 may transmit the one or more PLRSs using the default PLRS resources. It is noted that while the UE 115 may determine the default PLRS resources for the transmission of uplink signaling, the described techniques may be used for other transmissions and signaling by the UE 115 or by other devices. For example, the techniques described herein may be applied to sidelink communications, which may include D2D communications, V2X communications, V2E communications, or the like. In other examples, the UE 115 may be an example of a repeater or relay note, and may utilize the techniques described herein. As such, the described techniques related to PLRS resources associated with uplink transmissions should not be considered limiting.

In some cases, a TRP index (e.g., an index of a TRP, such as at a base station 105 having one or more TRPs) or a panel index (e.g., an index corresponding to an antenna panel at a UE 115, which may be denoted using a value of *k* (e.g., *k* = 0,1)) may be implicitly indicated to one or more devices in wireless communications system 100. For example, a UE 115 may determine a TRP index based an indirect or implicit indication of a TRP index, or the UE 115 may determine a TRP index based on various parameters, identifiers, index values, or other configurations or signaling associated with a TRP index. As an example, a UE may determine a TRP index based on a resource set identifier or index (e.g., a CORESET pool index), where a CORESET pool index may, for example, have a value of 0 and 1 associated with different TRPs and/or UE panels. In other examples, a reference signal resource set identifier (ID) (e.g., a sounding reference signal (SRS) set ID) and/or reference signal resource ID (e.g., an SRS resource ID) may be indicative of a TRP index or UE panel index. In such cases, an SRS set ID or SRS resource ID may be associated with a UE panel/TRP, and another SRS set ID or SRS resource ID may be associated with another UE panel/TRP. Beam IDs and/or beam group IDs may also implicitly indicate a panel index or TRP index, where some beam ID or beam group ID may be associated with a UE panel, and another beam ID or beam group ID may be associated with another UE panel. In some examples, the beam may be associated with a TCI state or spatial relation information (e.g., where transmission and reception beams may have a correspondence or reciprocity.

Additionally or alternatively, a closed loop index for power control (e.g., an uplink transmit power control configuration may be configured with a close loop index) may also provide an implicit indication of a panel index and/or TRP index. Here, different values of the closed loop index (e.g., 0, 1) may be associated with different UE panels/TRPs. Antenna ports may also provide an implicit indication of UE antenna panel and/or TRP indexes, where an antenna port ID or antenna port group ID may be associated with a UE panel/TRP, and another antenna port ID or antenna port group ID may be associated with another UE panel/TRP. In such cases, the antenna ports may be associated with various signals, including PUSCH, SRS, a phase tracking reference signal (PTRS), or the like.

In some cases, a UE panel index or TRP index may be indicated (e.g., implicitly) by a DMRS code division multiplexing (CDM) group ID such that a first DMRS CDM group ID may be associated with a first UE antenna panel or TRP, and a second, different DMRS CDM group ID may be associated with a second UE antenna panel or TRP. In other examples, a timing advance (TA) group ID (e.g., a TAG ID configured for a panel-specific TA) may be indicative of a UE panel index or TRP index, where different TAG IDs may be associated with different UE antenna panels or TRPs.

Similarly, PUCCH resource ID and/or a PUCCH resource group IDs may be associated with different UE antenna panels and/or TRPs, and different ID values may correspond to different panels or TRPs. Additionally or alternatively, two or more radio network temporary identifiers (RNTIs) may be associated with respective UE panels or TRPs. In some examples, a physical cell identifier (PCI), a synchronization signal block (SSB) set ID, or the like, may provide an indication of a UE panel or TRP, where a PCI or SSB set ID may be associated with a UE panel/TRP, and another PCI or SSB set ID may be associated with another UE panel/TRP. In some cases, a UE 115 may determine an implicit TRP index, which may reduce signaling overhead and network congestion. In other examples, a UE may be provided with an explicit TRP index that may be used in the selection of default PLRS resources.

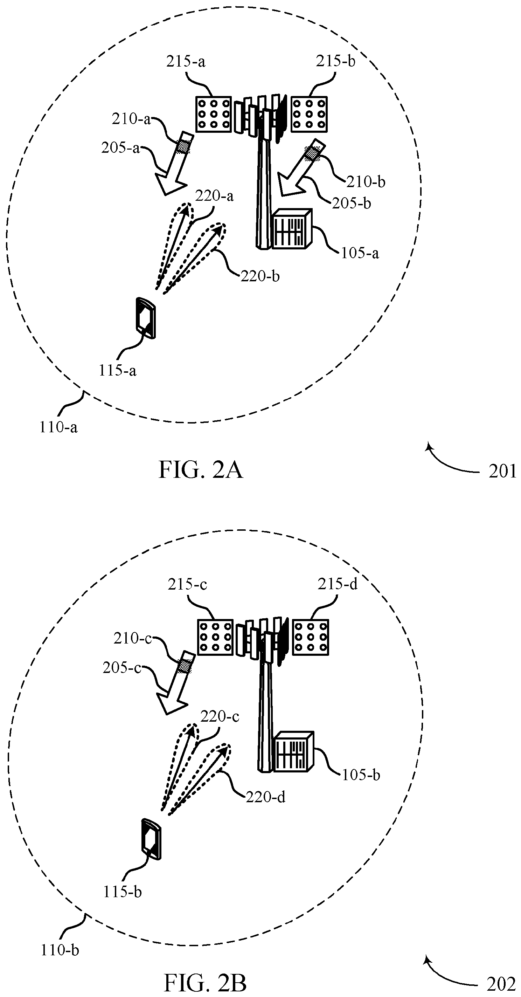

FIGs. 2A and **2B** illustrate examples of wireless communications systems 201 and 202, respectively, that support PLRS for multi-panel uplink transmissions in accordance with aspects of the present disclosure. In some examples, the wireless communications systems 201 and 202 may implement aspects of wireless communications system 100. For example, the wireless communications systems 201 and 202 may include UEs 115 and base stations 105 that support multi-panel/multi-TRP communications schemes, where multiple uplink transmissions may be scheduled using one or more messages including DCI.

The wireless communications system 201 may include base station 105-a and UE 115-a, which may be examples of a base station 105 and a UE 115 as described with reference to FIG. 1. Base station 105-a may be associated with coverage area 110-a, and UE 115-a may receive a control message 210 on communication link 205. Base station 105-a may be associated with multiple TRPs 215 (e.g., TRP 215-a and TRP 215-b), and the multiple TRPs 215 may transmit control messages 210 (e.g., control message 210-a and control message 210-b) to UE 115-a using the communication links 205 (e.g., communication links 205-a and 205-b). In other examples, TRP 215-a and TRP 215-b may be associated with different base stations 105.

The wireless communications system 201 of FIG. 2A may support techniques for determining default PLRS resources for multi-DCI-based multi-panel transmissions. In particular, UE 115-a may be configured for multiple uplink transmissions (e.g., PUSCH, PUCCH, SRS), and UE 115-a may determine default PLRS resources 220 for PLRS transmissions associated with the multiple uplink transmissions. For example, UE 115-a may receive control message 210-a (e.g., a first DCI) scheduling an uplink transmission to TRP 215-a (e.g., a first PUSCH) and control message 210-b (e.g., a second DCI) scheduling an uplink transmission to TRP 215-b (e.g., a second PUSCH). UE 115-a may receive control message 210-a on communication link 205-a and control message 210-b on communication link 205-b. In some examples, UE 115-a may not be configured with, or UE 115-a may be missing, some configuration information for the particular PLRS resources to use (e.g., for a time period). As a result, UE 115-a may determine some default PLRS resources 220 (e.g., PLRS resources 220-a and PLRS resources 220-b) for the transmission of one or more PLRSs to the TRPs 215-a and 215-b, for example, on respective beams corresponding to a first uplink transmission and a second uplink transmission.

The PLRS resources determined by UE 115-a may be beam specific, and may be based on the TRP indexes of the respective TRPs 215. In addition, UE 115-a may determine the default PLRS resources based on resource selection rules and a determine of whether PLRSs are configured (e.g., via RRC or other signaling). UE 115-a may determine default PLRS resources 220-a based on a TRP index of TRP 215-a and default PLRS resources 220-b based on a TRP index of TRP 215-b. For example, UE 115-a may determine default PLRS resources 220-a based on a lowest PLRS identifier (e.g., the lowest ID of "PUSCH-PathlossReferenceRS-Id") associated with the TRP index of TRP 215-a and default PLRS resources 220-b based on the lowest PLRS identifier (e.g., the lowest ID of "PUSCH-PathlossReferenceRS-Id") associated with the TRP index of TRP 215-b. Additionally, the resource selection rules may include the identification of the format of DCI provided to UE 115-a, whether the DCI includes some fields, and/or whether additional RRC configurations are provided to UE 115-a.

As an example, UE 115-a may be configured with a plurality of PLRSs via higher-layer signaling (e.g., a "PUSCH-PathlossReferenceRS-Id" configuration), and the multi-panel transmissions of a PUSCH may be scheduled by multiple control messages 210 (e.g., multiple DCIs). A PUSCH transmission may be scheduled by a DCI format "0_0" associated with a TRP index, and UE 115-a may not be provided a spatial setting for a PUCCH transmission associated with the same TRP index. In another example, the PUSCH transmission may be scheduled by a DCI format "0_1" associated with a TRP index, and the DCI may not indicate a PLRS for PUSCH transmission (e.g., may not include a sounding reference signal (SRS) resource indicator (SRI) field). In an additional example, a power control configuration (e.g., an "SRI-PUSCH-PowerControl" configuration which maps a set of PLRSs to a set of SRI codepoints in DCI) associated with the TRP index may not be provided to UE 115-a. In such examples, UE 115-a may determine a PLRS resource index with a respective "PUSCH-PathlossReferenceRS-Id" value being equal to the lowest ID associated with the TRP index, where the PLRS resource is either on a serving cell or, if provided, on a serving cell indicated by a value of a linking configuration (e.g., "pathlossReferenceLinking").

In some other examples, UE 115-a may determine default PLRS resources 220-a based on control message 210-a (e.g., a DCI) and default PLRS resources 220-b based on control message 210-b (e.g., a DCI), for example, when transmitting PUSCH. UE 115-a may also determine that control message 210-a corresponds to a TRP index of TRP 215-a and that control message 210-b corresponds to a TRP index of TRP 215-b. In such cases, UE 115-a may determine default PLRS resources 220-a based on a CORESET ID (e.g., a lowest CORESET ID) that is associated with the TRP index of TRP 215-a and corresponds to a TCI state indicating "QCL-TypeD," and UE 115-a may determine default PLRS resources 220-b based on the lowest ID CORESET that is associated with the TRP index of TRP 215-b and corresponds to a TCI state indicating "QCL-TypeD."

Put another way, UE 115-a may be configured with a default beam configuration (e.g., "enableDefaultBeamP1ForPUSCH0_0") where the beam for uplink transmission is not explicitly indicated and communicate with base station 105-a via a scheduling cell. UE 115-a may receive multiple control messages 210 (e.g., multiple DCIs) and transmit one or more uplink signals (e.g., over PUSCH) based on the control messages 210. For example, a PUSCH transmission may be scheduled by a DCI format "0_0" associated with a TRP index, and the UE may not be provided PUCCH resources for the active uplink BWP associated with the TRP index. In the same example, UE 115-a may be provided with additional RRC configuration information (e.g., "enableDefaultBeamP1ForPUSCH0_0"). UE 115-a may determine a PLRS resource index providing a periodic reference signal resource with "QCL-TypeD" in the TCI state or using the QCL assumption of a CORESET with the lowest index associated with the TRP index in the active downlink BWP of the scheduling cell for the serving cell. In some examples, DCI format 0_0 may not schedule multi-TRP transmissions as a single DCI.

In other examples of determining default PLRS resources based on TRP indexes and resource selection rules, for example, when transmitting data on PUSCH, UE 115-a may be configured with a default beam configuration (e.g., enableDefaultBeamP1ForPUSCH0_0) and communicate with base station 105-a via a primary cell. UE 115-a may receive multiple control messages 210 (e.g., multiple DCIs) and transmit one or more uplink signals (e.g., PUSCHs) based on the control messages 210. For example, a PUSCH transmission may be scheduled by a DCI format "0_0" associated with a TRP index. In the same example, UE 115-a may not be provided a spatial setting for PUCCH resources associated with the TRP index on the active UL BWP of the primary cell. Further, UE 115-a may be provided with the configuration "enableDefaultBeamP1ForPUSCH0_0." Here, the UE may determine a PLRS resource index providing a periodic reference signal resource with "QCL-TypeD" in the TCI state or the QCL assumption of a CORESET with the lowest index associated with the TRP index in the active downlink BWP of the primary cell. Put another way, UE 115-a may determine default PLRS resources 220-a and 220-b based on periodic reference signal resources, where the resources may be determined using a spatial QCL relationship (e.g., "QCL-TypeD") in the TCI state (or using a QCL assumption) associated with a CORESET monitored by UE 115-a. In such cases, multiple CORESETs may correspond to a same pool index, and UE 115-a may rely on a QCL relationship for a CORESET having an index (e.g., a lowest index) associated with a TRP index when determining the default PLRS resources, where the QCL relationship for the CORESET may indicate uplink resources for the respective PLRSs.

In some cases, UE 115-a may be configured with a plurality of power control identifiers (e.g., "sri-PUSCH-PowerControlId"), which maps a set of power control parameters such as PLRS identifiers (e.g., "PUSCH-PathlossReferenceRS-Id") to a set of SRI codepoints in a DCI, and UE 115-a may use the mapping to determine default PLRS resources 220-a and default PLRS resources 220-b if the DCI does not indicate an SRI codepoint. For example, UE 115-a may determine default PLRS resources 220-a based on the lowest value of "PUSCH-PathlossReferenceRS-Id" that is associated with the TRP index of TRP 215-a, where the lowest value of "PUSCH-PathlossReferenceRS-Id" is identified based on the mapping. UE 115-a may determine default PLRS resources 220-b based on the lowest value of "PUSCH-PathlossReferenceRS-Id" that is associated with the TRP index of TRP 215-b, where the lowest value of "PUSCH-PathlossReferenceRS-Id" is identified based on the mapping.

In other words, using resource selection rules (e.g., a mapping between configured parameters) and the respective TRP indexes of the TRPs 215-a and 215-b, UE 115-a may select the default PLRS resources for transmitting PLRSs when transmitting data on PUSCH. In such cases, the multiple control messages 210-a and 210-b may correspond to DCIs and may not indicate an SRI (e.g., exclude a SRI field) of a dynamic grant (DG) or a configured grant (CG) for PUSCH (i.e., PUSCH may be associated with DG or CG communication schemes, where the DCI of the control messages 210 may or activate trigger the transmission of PUSCH in the case of the CG scheme). If UE 115-a is provided "enablePLRSupdateForPUSCHSRS", UE 115-a may accordingly identify or infer a mapping between configured identifier values (e.g., between "sri-PUSCH-PowerControlId" and "PUSCH-PathlossReferenceRS-Id" values associated with a TRP index), where the mapping may be updated by a MAC-CE. For a PUSCH transmission associated with a TRP index scheduled by a control message 210 (e.g., a DCI) format that does not include an SRI field associated with the TRP index, or for a PUSCH transmission associated with a TRP index configured by "ConfiguredGrantConfig" and activated by a DCI format that does not include an SRI field associated with the TRP index, UE 115-a may determine a PLRS resource index from the "PUSCH-PathlossReferenceRS-Id" mapped to "sri-PUSCH-PowerControlld," for example, being the lowest identifier value associated with the TRP index. It is noted that while a lowest index or identifier may be used in the examples described herein, any index or identifier value may be used when selecting the default resources.

In some cases, UE 115-a may determine default PLRS resources 220-a based on control message 210-a (e.g., a DCI) and default PLRS resources 220-b based on control message 210-b (e.g., a DCI). UE 115-a may also determine that control message 210-a corresponds to TRP 215-a and that control message 210-b corresponds to TRP 215-b. In some examples, UE 115-a may determine default PLRS resources 220-a based on the lowest ID CORESET that is associated with the TRP index of TRP 215-a and having a TCI state indicating "QCL-TypeD," and UE 115-a may determine default PLRS resources 220-b based on the lowest ID CORESET that is associated with the TRP index of TRP 215-b and corresponds to a TCI state indicating "QCL-TypeD," where both lowest ID CORESETs may be provided in an active downlink BWP of UE 115-a. In some other examples, UE 115-a may determine default PLRS resources 220-a based on the lowest ID active PDSCH TCI state that is associated with the TRP index of TRP 215-a and indicates "QCL-TypeD," and UE 115-a may determine default PLRS resources 220-b based on the lowest ID active PDSCH TCI state that is associated with the TRP index of TRP 215-b and indicates "QCL-TypeD," where the CORESETs associated with the TRP indexes of TRP 215-a and 215-b are not provided in the active DL BWP of UE 115-a.

In such examples, when transmitting data on PUSCH, the multiple control messages 210-a and 210-b may correspond to DCIs that do not include an SRI field associated with a TRP index of a TRP 215, and UE 115-a may not be configured with "PUSCH-PathlossReferenceRS-Id". For a PUSCH transmission associated with a TRP index scheduled by a DCI format that does not include an SRI field associated with TRP index, or for a PUSCH transmission associated with a TRP index configured by, for example, "ConfiguredGrantConfig," and activated by a DCI format that does not include an SRI field associated with the TRP index, UE 115-a may determine a PLRS resource index providing a periodic reference signal resource with "QCL-TypeD" in the TCI state using the QCL assumption of a CORESET with the lowest index associated with the TRP index, if CORESETs associated with both TRP indexes (e.g., the TRP index of TRP 215-a and the TRP index of TRP 215-b) are provided in the active downlink BWP. In another example, UE 115-a may determine a PLRS resource index providing a periodic reference signal resource with "QCL-TypeD" the active PDSCH TCI state with the lowest ID associated with the TRP index if CORESETs associated with the TRP indexes are not provided in the active DL BWP.

The wireless communications system 202 of FIG. 2B may support techniques for determining default PLRS resources for single-DCI-based multi-panel transmissions. Base station 105-b may be associated with coverage area 110-b, and UE 115-b may receive control message 210-c on communication link 205-c. Base station 105-a may also be associated with multiple TRPs 215, and the multiple TRPs 215 may transmit control message 210-c to UE 115-b using the communication link 205-c. As discussed herein, the TRPs 215-a and 215-b may additionally or alternatively be associated with different base stations 105. In some cases, UE 115-b may be configured for multiple uplink transmissions from different antenna panels, and UE 115-b may determine default PLRS resources 220 for multiple PLRS transmissions that are associated with the multiple uplink transmissions. For example, UE 115-b may receive control message 210-c (e.g., DCI) scheduling an uplink transmission to TRP 215-c (e.g., a first PUSCH) and an uplink transmission to TRP 215-d (e.g., a second PUSCH). UE 115-b may determine default PLRS resources 220-c based on a TRP index corresponding to TRP 215-c and default PLRS resources 220-d based on a TRP index corresponding to TRP 215-d. As such, the PLRS resources determined by UE 115-b may be beam specific, and may be based on the TRP indexes of the respective TRPs 215. In addition, UE 115-a may determine the default PLRS resources based on resource selection rules and a determine of whether PLRSs are configured (e.g., via RRC signaling).

In an example, when transmitting data on PUSCH, UE 115-b may determine default PLRS resources 220-c based on mapping an SRI field value of control message 210-c that is associated with the TRP index of TRP 215-c to a value of a configuration of multiple PLRSs (e.g., "PUSCH-PathlossReferenceRS-Id"), and UE 115-b may determine default PLRS resources 220-d based on mapping an SRI field value of control message 210-c that is associated with the TRP index of TRP 215-d to a value of "PUS CH-PathlossReferenceRS-Id." In some other cases, UE 115-b may determine default PLRS resources 220-c based on the lowest value of "PUSCH-PathlossReferenceRS-Id" that is associated with the TRP index of TRP 215-c, and UE 115-b may determine default PLRS resources 220-d based on the lowest value of "PUSCH-PathlossReferenceRS-Id" that is associated with the TRP index of TRP 215-d.

In such cases, the control message 210-c may correspond to a DCI that may or may not indicate an SRI, and in some other examples, the control message 210-c may correspond to DCI activating a CG PUSCH transmission. For a PUSCH transmission associated with a TRP index configured by a CG configuration (e.g., "ConfiguredGrantConfig") that may not include additional configuration information (e.g., "rrc-ConfiguredUplinkGrant,"), UE 115-b may determine a PLRS resource index from a value of "PUSCH-PathlossReferenceRS-Id" that may be mapped to a SRI field value associated with the TRP index in a DCI format activating the PUSCH transmission. In cases where the DCI formation activating the PUSCH transmission may not include an SRI field associated with the TRP index, UE 115-b may determine a PLRS resource index with a respective "PUSCH-PathlossReferenceRS-Id" value being equal to the lowest value associated with the TRP index where the reference signal resource is either on a serving cell or, if provided, on a serving cell indicated by a value of a linking configuration (e.g., "pathlossReferenceLinking").

In another example, when transmitting PUSCH to each TRP 215, UE 115-b may determine default PLRS resources 220-c and 220-d based on the TCI state within a TCI codepoint, where the TCI state may have a lowest ID that is associated with a respective TRP index and further corresponds to a pair of TCI states, and the default PLRS resources 220-c and 220-d may be periodic resources having a QCL relationship (e.g., "QCL-TypeD"). For example, default PLRS resources 220-c may be periodic resources based on a TCI state corresponding to a TCI codepoint (e.g., indicating multiple TCI states), and default PLRS resources 220-d may likewise be a periodic resource based on a TCI state corresponding to a TCI codepoint. In some examples, the control message 210-c may correspond to a DCI that does not include an SRI field associated with a TRP index corresponding to a TRP 215, and the UE 115-b may not be configured with "PUSCH-PathlossReferenceRS-Id." For a PUSCH transmission associated with a TRP index scheduled by a DCI format that may not include an SRI field associated with the TRP index, or for a PUSCH transmission that may be associated with a TRP index configured by "ConfiguredGrantConfig" and activated by a DCI format that may not include an SRI field associated with the TRP index, UE 115-b may determine a PLRS resource index providing a reference signal resource with "QCL-TypeD" in the active PDSCH TCI state associated with the TRP index in a TCI codepoint with the lowest ID among the TCI codepoints with a pair of TCI states, if CORESETs are not provided in the active DL BWP of UE 115-b. In some examples, the UE 115 may determine a PLRS resource index providing a periodic reference signal resource with "QCL-TypeD" in the TCI state using the QCL assumption of a CORESET with the lowest index associated with the TRP index, if CORESETs are provided in the active downlink BWP, and the UE 115 may otherwise determine a PLRS based on the active TCI state with the lowest ID associated with the TRP index if CORESETs associated with the TRP index are not provided in the active BWP.

While the above examples describe aspects of determining default PLRS resources associated with PUSCH transmission, for example, in multi-DCI and single-DCI schemes for multi-panel transmissions, UE 115-a and UE 115-b may also determine default PLRS resources associated with other uplink transmission, such as PUCCH, SRS, or the like. For example, UE 115-b may receive control message 210-c (e.g., DCI) scheduling an uplink transmission to TRP 215-c (e.g., a first PUCCH) and an uplink transmission to TRP 215-d (e.g., a second PUCCH). Additionally or alternatively, UE 115-a may receive control message 210-a (e.g., a first DCI) and receive control message 210-b (e.g., a second DCI) that provide for different uplink transmissions (e.g., from respective UE antenna panels) of control information via PUCCH to TRP 215-a and TRP 215-b. In either case, UE 115-a and UE 115-b may determine default PLRS resources 220 based on a TRP index of the respective TRPs 215.

In one example, a UE 115 may be transmitting one or more PLRSs associated with PUCCHs, and the UE 115 may determine default PLRS resources for the PLRS transmissions. For example, the UE 115 may receive one or more control messages 210 scheduling an uplink transmissions to multiple TRPs 215. The UE 115 may determine that a control message 210 corresponds to a TRP index of a TRP 215. In some examples, a UE 115 may determine multiple PLRS resources 220 based on the control message 210, while in some other examples, a UE 115 may determine a first PLRS resources 220 based on a first control message 210 and a second PLRS resources 220 based on a second control message 210. In either case, UE 115-b may determine PLRS resources 220-a based on the lowest identifier of "PUCCH-PathlossReferenceRS" that is associated with the TRP index of TRP 215-a (e.g., the TRP index indicated in control message 210-a), and UE 115-b may determine PLRS resources 220-b based on the lowest identifier of "PUCCH-PathlossReferenceRS" that is associated with the TRP index of TRP 215-b (e.g., the TRP index indicated in control message 210-b). Put another way, the UE 115 may be provided with the RRC configuration "pathlossReferenceRSs" but may not be provided with additional RRC configuration information (e.g., "PUCCH-SpatialRelationInfo") for a PUCCH associated with a TRP index of a TRP 215. The UE 115 may obtain the "PL-referenceSignal" value in "PUCCH-PathlossReferenceRS" from the "pucch-PathlossReferenceRS-Id" with the lowest index ID associated with the TRP index in "PUCCH-PathlossReferenceRS," where the reference signal resource is either on a same serving cell or, if provided, on a serving cell indicated by a value of "pathlossReferenceLinking." In such cases, the UE 115 may utilize other configurations when determining which resources to use for the default PLRS resources 220.

In some cases, a UE 115 may determine a default PLRS resources 220 based on a control message 210. The UE 115 may also determine that the control message 210 corresponds to a TRP index of a TRP 215. In some examples, the UE 115 may determine default PLRS resources 220 based on the lowest ID CORESET that is associated with the TRP index of the TRP 215 and corresponds to a TCI state indicating "QCL-TypeD." For example, when transmitting PUCCH using multi-panel transmissions, a UE 115 may not being provided with a configuration "pathlossReferenceRSs," and the UE 115 may also not being provided "PUCCH-SpatialRelationInfo." In this example, the UE 115 also may not be provided additional configuration information "enableDefaultBeamPlForPUCCH." As a result, the UE 115 may determine a PLRS resource index providing a reference signal resource with "QCL-TypeD" in the TCI using the QCL assumption of a CORESET with the lowest index associated with the TRP index in the active DL BWP of the primary cell.

In some cases, a UE 115 may transmit PLRSs that are associated with SRSs to multiple TRPs 215, and the UE 115 may determine default PLRS resources 220 for the uplink transmissions of SRS. In some examples, the UE 115 may calculate pathloss using a default PLRS resources 220 obtained from the synchronization signal (SS) and/or physical broadcast channel (PBCH) block that is used to obtain the master information block (MIB) associated with the TRP index of a TRP 215. For example, UE 115-b may receive a first MIB associated with TRP 215-c on a first communication resource and a second MIB associated with TRP 215-d on a second communication resource, and UE 115-b may determine default PLRS resources 220-c based on the first communication resource and default PLRS resources 220-d based on the second communication resource. In some examples, the UE 115 may not be provided "pathlossReferenceRS" or "SRS-PathlossReferenceRS" for an SRS associated with a TRP index, or before the UE 115 is provided dedicated higher layer parameters, the UE 115 may calculate pathloss using a PLRS resource index obtained from the SS/PBCH block that the UE 115 uses to obtain the MIB associated with the TRP index.

In some cases, the UE 115 may determine default PLRS resources 220 based on one or more control messages 210, and the UE 115 may also determine that a control message 210 corresponds to a TRP index of a TRP 215. In some examples, the UE 115 may determine a default PLRS resources 220 based on the lowest ID CORESET that is associated with the TRP index of a TRP 215 and corresponds to a TCI state indicating "QCL-TypeD." In some other examples, the UE 115 may determine a default PLRS resources 220 based on the lowest ID active PDSCH TCI state that is associated with the TRP index of a TRP 215 and indicates "QCL-TypeD." In some other examples, the UE 115 may determine a default PLRS resources 220 based on the TCI codepoint with the lowest ID that is associated with the TRP index and corresponds to a pair of TCI states indicating "QCL-TypeD."

The UE 115 may determine default PLRS resources 220 for SRS transmissions to multiple TRPs 215. In some examples, a UE 115 may not be provided "pathlossReferenceRS" or "SRS-PathlossReferenceRS." In the same example, the UE 115 may not be provided "spatialRelationInfo," and the UE 115 may be provided "enableDefaultBeamPlForSRS." In some cases, the UE 115 may determine a reference signal resource index providing a periodic reference signal resource with "QCL-TypeD" in the TCI state using the QCL assumption of a CORESET with the lowest index associated with the TRP index, for example, if CORESETs associated with the TRP index are provided in the active downlink BWP. In some other cases, the UE 115 may determine an reference signal resource index providing a periodic reference signal resource with "QCL-TypeD" in the active PDSCH TCI state with lowest ID associated with the TRP index or the active PDSCH TCI state associated with the TRP index in a TCI codepoint with a lowest ID among the TCI codepoints with a pair of TCI states, if CORESETs are not provided in the active downlink BWP.

In some cases, the UE 115 may determine default PLRS resources 220 for PLRSs corresponding to an uplink signal (e.g., a PUSCH, a PUCCH, an SRS) that is associated with a TRP 215, where PLRSs may not be configured (e.g., by the network) using a single-DCI-based multi-panel transmission. In such cases, the UE 115 may determine a default PLRS resources based on TCI state information and/or a predetermined mapping. For example, the UE 115 may select multiple periodic reference signals separately from a first and second TCI. In such cases, a TCI state (e.g., the TCI state with the lowest ID) of the first value of all 2-TCI pairs may be selected for a first TRP 215, and a TCI state (e.g., the TCI state with the lowest ID) of the second value of all 2-TCI pairs may be selected for a second TRP 215. In some other examples, the UE 115 may select multiple periodic reference signals from a 2-TCI pair. The UE 115 may select a pair of TCI states with the lowest or highest sum of TCI state IDs as the periodic reference signals. The UE 115 may select a pair of TCI states corresponding to the first TCI codepoint with two TCIs as the period reference signals. In some other examples, the UE 115 may select a primary default PLRS as indicated in a Standards agreement (e.g., Release 15) and a secondary default PLRS based on a pre-determined mapping. The pre-determined mapping may be based on existing 2-TCI pairs. For example, if a primary default PLRS corresponds to one TCI of any 2-TCI pair, the secondary default PLRS may correspond to the other TCI state in the same TCI pair.

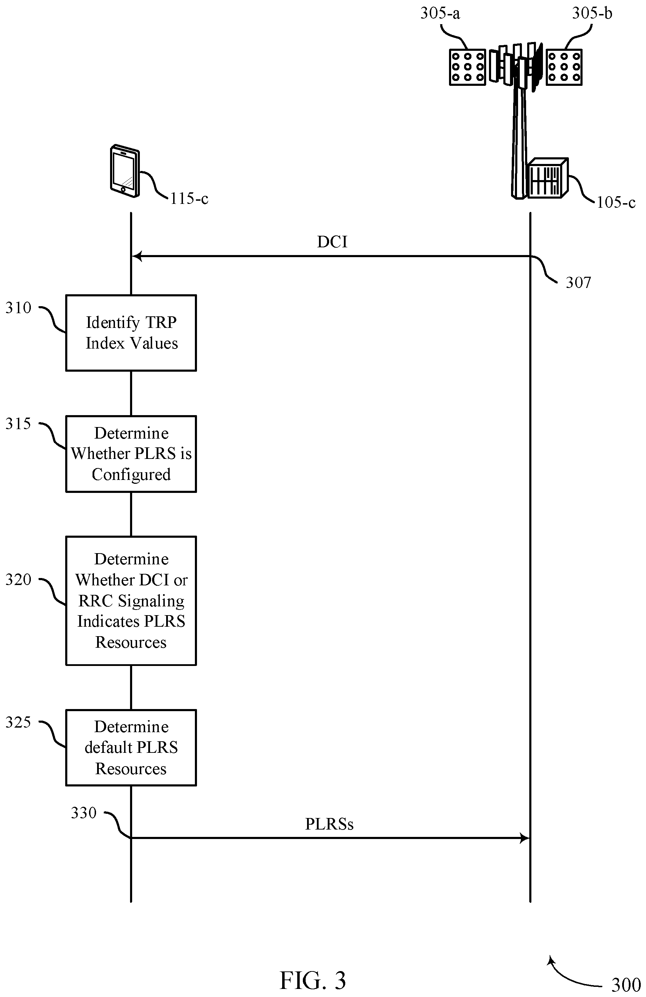

FIG. 3 illustrates an example of a process flow 300 that supports PLRS for multi-panel uplink transmission in accordance with aspects of the present disclosure. In some examples, the process flow 300 may implement aspects of wireless communications system 100. The process flow 300 includes UE 115-c base station 105-c, which may be examples of the corresponding devices as described with reference to FIG. 1, FIG. 2A, and FIG. 2B. UE 115-c may determine default PLRS resources for TRP 305-a and TRP 305-b to improve network efficiency and decrease latency. Alternative examples of the following may be implemented, where some steps are performed in a different order than described or are not performed at all. In some cases, steps may include additional features not mentioned below, or further steps may be added. The process flow 300 may support techniques for default reference signal resource selection for the transmission of PLRSs associated with various signals (e.g., over PUCCH, over PUSCH, SRS, or the like).

UE 115-c and base station 105-c may support multi-panel/multi-TRP communication schemes, where a first transmission of a signal to a first TRP 305-a may be sent using a first panel of UE 115-c. Also, a second transmission of the signal to a second TRP 305-b may be sent using a second panel of UE 115-c. The multiple transmissions may be scheduled or activated (such as in the case of CG schemes) by one or more DCI from base station 105-c. Thus, at 307, base station 105-c may transmit, and UE 115-c may receive, one DCI or multiple DCI for multiple uplink transmissions. In particular, the one DCI may schedule uplink transmissions on multiple UE antenna panels to the respective TRPs 305-a and 305-b. Alternatively, different DCI may schedule respective transmissions on the multiple UE antenna panels to the respective TRPs 305-a and 305-b.

At 310, UE 115-c may identify respective TRP index values corresponding to a first TRP (e.g., TRP 305-a) and a second TRP (e.g., TRP 305-b). UE 115-c may be configured for at least a first transmission of an uplink signal (e.g., a PUSCH, a PUCCH, an SRS, etc.) to the first TRP 305-a using a first antenna panel and a second transmission of the uplink signal to the second TRP 305-b using a second antenna panel different from the first antenna panel.

At 315, UE 115-c may determine whether PLRS are configured in the system. For instance, UE 115-c may receive various configurations that may configure at least a set of PLRSs. The configuration, however, may not indicate the PLRS resources to use for transmitting one or more PLRSs associated with the uplink signal. In other cases, UE 115-c may not have a configuration for the PLRSs.

Further, even in cases where PLRSs are configured (e.g., via RRC signaling), at 320, may determine whether the DCI or additional signaling (e.g., RRC signaling) indicates the PLRS resources to use for transmitting the one or more PLRSs. In some examples, the additional configuration may not be provided by the DCI or other signaling. For instance, the DCI format may not include SRI fields associated with TRP indexes. Additionally or alternatively, UE 115-c may not be provided with beam configurations or spatial settings for uplink resources. In other examples, UE 115-c may not be provided with a power control configuration. In any case, UE 115-c may still transmit PLRS to TRP 305-a and TRP 305-b by determining some default PLRS resources based on the TRP indexes of the TRPs 305.

At 315, UE 115-c may determine default PLRS resources for one or more PLRSs that are associated with the first transmission and the second transmission of the uplink signal. The UE 115-c may determine the default PLRS resources based on a determination of whether PLRSs are configured (e.g., whether "PathlossReferenceRS-Id" is configured), the respective TRP index values, and a resource selection rule (e.g., select a PLRS resource based on a lowest resource ID, select a PLRS resource based on a highest resource ID, select a PLRS resource based on a downlink resource and QCL relationships, select PLRS resources based on a mapping, etc.).

At 320, UE 115-c may transmit the one or more PLRSs using the default PLRS resources. For example, UE 115-c may transmit a first PLRS of the one or more PLRSs using a PLRS resource that is associated with a TRP index of TRP 305-a and a second PLRS of the one or more PLRSs using a PLRS resource that is associated with a TRP index of TRP 305-b. In some cases, a default PLRS resource may be determined based on a resource indicated by or associated with a control message (e.g., a DCI, a MAC CE, etc.). Determining default PLRS resources may reduce signaling overhead and reduce the configuration time of a UE 115.

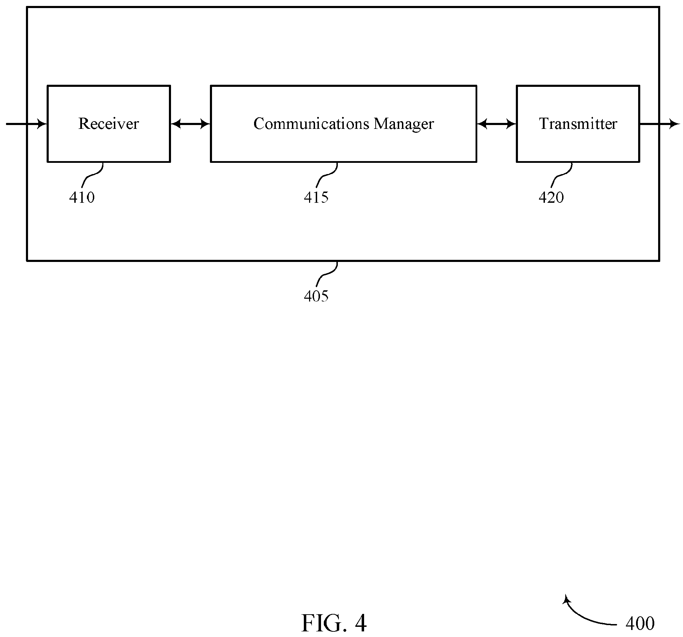

**FIG.** 4 shows a block diagram 400 of a device 405 that supports default pathloss reference signals for multi-panel uplink transmission in accordance with aspects of the present disclosure. The device 405 may be an example of aspects of a UE 115 as described herein. The device 405 may include a receiver 410, a communications manager 415, and a transmitter 420. The device 405 may also include a processor. Each of these components may be in communication with one another (e.g., via one or more buses).

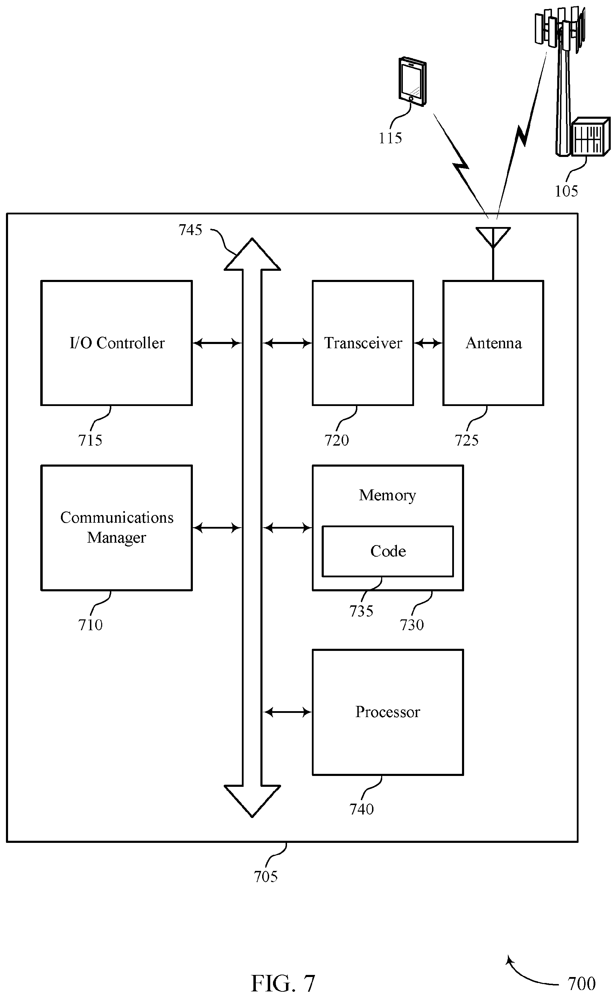

The receiver 410 may receive information such as packets, user data, or control information associated with various information channels (e.g., control channels, data channels, and information related to default pathloss reference signals for multi-panel uplink transmission, etc.). Information may be passed on to other components of the device 405. The receiver 410 may be an example of aspects of the transceiver 720 described with reference to FIG. 7. The receiver 410 may utilize a single antenna or a set of antennas.

The communications manager 415 may identify (e.g., for a UE) respective TRP index values corresponding to a first TRP and a second TRP. In some cases, the UE may be configured for transmitting at least a first transmission of an uplink signal to the first TRP using a first antenna panel and a second transmission of the uplink signal to the second TRP using a second antenna panel different from the first antenna panel (e.g., multi-panel/multi-TRP communications). In some cases, the communications manager 415 may determine default PLRS resources for one or more PLRSs that are associated with the first transmission and the second transmission of the uplink signal, the default PLRS resources being based on a determination of whether PLRSs are configured, the respective TRP index values, and a resource selection rule. In some examples, the communications manager 415 may transmit the one or more PLRSs using the default PLRS resources. The communications manager 415 may be an example of aspects of the communications manager 710 described herein.

The communications manager 415, or its sub-components, may be implemented in hardware, code (e.g., software or firmware) executed by a processor, or any combination thereof. If implemented in code executed by a processor, the functions of the communications manager 415, or its sub-components may be executed by a general-purpose processor, a digital signal processor (DSP), an application-specific integrated circuit (ASIC), a field-programmable gate array (FPGA) or other programmable logic device, discrete gate or transistor logic, discrete hardware components, or any combination thereof designed to perform the functions described in the present disclosure.

The communications manager 415, or its sub-components, may be physically located at various positions, including being distributed such that portions of functions are implemented at different physical locations by one or more physical components. In some examples, the communications manager 415, or its sub-components, may be a separate and distinct component in accordance with various aspects of the present disclosure. In some examples, the communications manager 415, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 420 may transmit signals generated by other components of the device 405. In some examples, the transmitter 420 may be collocated with a receiver 410 in a transceiver module. For example, the transmitter 420 may be an example of aspects of the transceiver 720 described with reference to FIG. 7. The transmitter 420 may utilize a single antenna or a set of antennas.

The communications manager 415 may be implemented as an integrated circuit or chipset for the device 405, and the receiver 410 and the transmitter 420 may be implemented as analog components (for example, amplifiers, filters, antennas) coupled with the device 405 modem to enable wireless transmission and reception. The actions performed by the communications manager 415 as described herein may be implemented to realize one or more potential advantages. At least one implementation may enable the communications manager 415 to determine resources indexes of resources for use when a configuration for PLRSs is absent or does not specify which resources to use. Based on implementing the techniques for selecting default and/or fallback PLRS resources described herein, one or more processors of the device 405 (for example, processor(s) controlling or incorporated with the communications manager 415) may promote improvements to signaling reliability and, in some examples, may promote reduced power consumption, higher data rates, and enhanced efficiency for high reliability and low latency operations, among other benefits by ensuring PLRSs may be efficiently transmitted by a UE. Additionally, communications manager 415 may increase available battery power, communication quality, and data throughput at a wireless device (e.g., a UE 115) by supporting the determination of default PLRS resources for multi-TRPs transmissions. For example, the determination of default PLRS resources, as described herein, may increase data throughput and reduce the latency associated with multi-TRP transmissions by providing techniques for quickly determining PLRS resources without performing additional control signaling with a base station (e.g., a base station 105) to configure the PLRS resources. The increase in data throughput may result in improved link performance and decreased signaling overhead based on determining the default PLRS resources. Accordingly, communications manager 415 may save power and increase battery life at a wireless device (e.g., a UE 115) by strategically increasing a quality of communications at a wireless device (e.g., a UE 115).

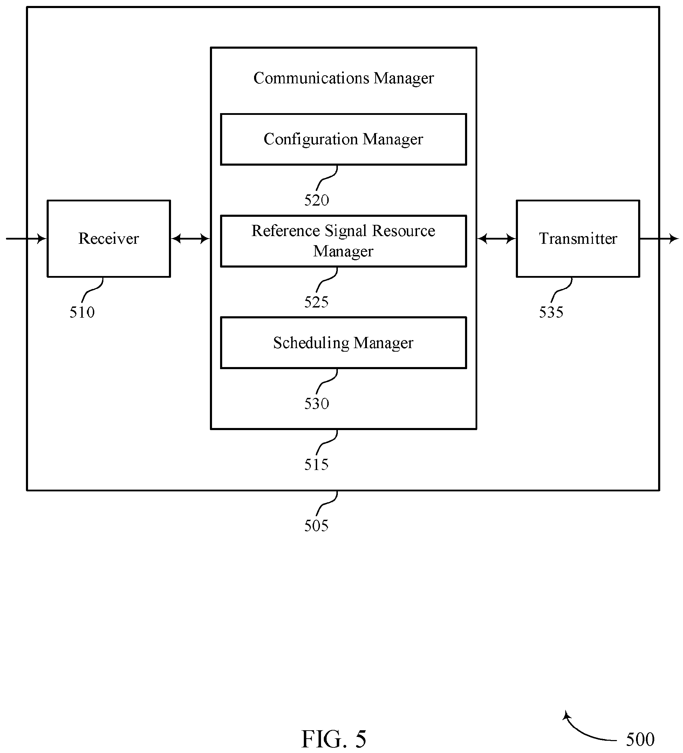

FIG. 5 shows a block diagram 500 of a device 505 that supports default pathloss reference signals for multi-panel uplink transmissions in accordance with aspects of the present disclosure. The device 505 may be an example of aspects of a device 405, or a UE 115 as described herein. The device 505 may include a receiver 510, a communications manager 515, and a transmitter 535. The device 505 may also include a processor. Each of these components may be in communication with one another (e.g., via one or more buses).

The receiver 510 may receive information such as packets, user data, or control information associated with various information channels (e.g., control channels, data channels, and information related to default pathloss reference signals for multi-panel uplink transmissions, etc.). Information may be passed on to other components of the device 505. The receiver 510 may be an example of aspects of the transceiver 720 described with reference to FIG. 7. The receiver 510 may utilize a single antenna or a set of antennas.

The communications manager 515 may be an example of aspects of the communications manager 415 as described herein. The communications manager 515 may include a configuration manager 520, a reference signal resource manager 525, and a scheduling manager 530. The communications manager 515 may be an example of aspects of the communications manager 710 described herein.

The configuration manager 520 may identify (e.g., for a UE) respective TRP index values corresponding to a first TRP and a second TRP. In some cases, the UE may be configured for transmitting at least a first transmission of an uplink signal to the first TRP using a first antenna panel and a second transmission of the uplink signal to the second TRP using a second antenna panel different from the first antenna panel. That is, the configuration manager 520 may identify TRP index values for TRPs used in cases where a UE is configured for or supports a multi- TRP/multi-panel communication scheme.

The reference signal resource manager 525 may determine default PLRS resources for one or more PLRSs that are associated with the first transmission and the second transmission of the uplink signal, the default PLRS resources being based on a determination of whether PLRSs are configured, the respective TRP index values, and a resource selection rule.

The scheduling manager 530 may transmit the one or more PLRSs using the default PLRS resources.

The transmitter 535 may transmit signals generated by other components of the device 505. In some examples, the transmitter 535 may be collocated with a receiver 510 in a transceiver module. For example, the transmitter 535 may be an example of aspects of the transceiver 720 described with reference to FIG. 7. The transmitter 535 may utilize a single antenna or a set of antennas.

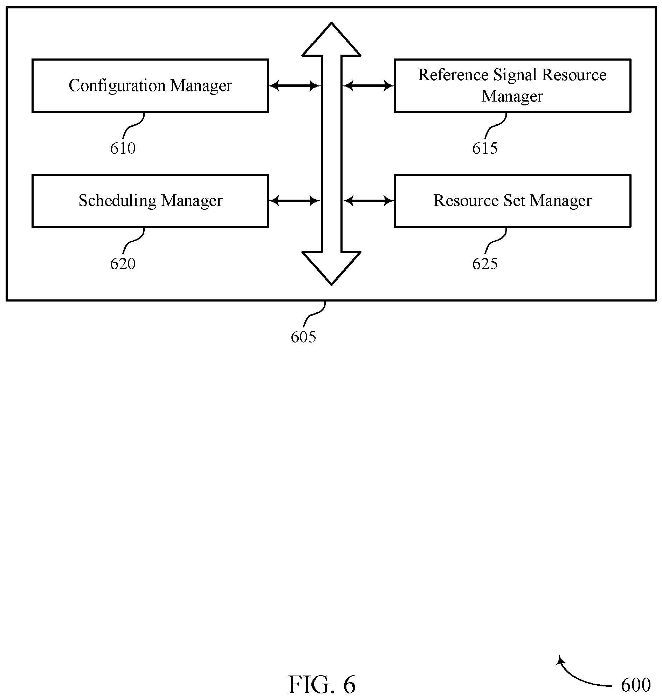

**FIG.** 6 shows a block diagram 600 of a communications manager 605 that supports default pathloss reference signals for multi-panel uplink transmissions in accordance with aspects of the present disclosure. The communications manager 605 may be an example of aspects of a communications manager 415, a communications manager 515, or a communications manager 710 described herein. The communications manager 605 may include a configuration manager 610, a reference signal resource manager 615, a scheduling manager 620, and a resource set manager 625. Each of these modules may communicate, directly or indirectly, with one another (e.g., via one or more buses).

The configuration manager 610 may identify respective TRP index values corresponding to a first TRP and a second TRP, where the communications manager 605 may be configured for transmitting at least a first transmission of an uplink signal to the first TRP using a first antenna panel and a second transmission of the uplink signal to the second TRP using a second antenna panel different from the first antenna panel.

In some examples, the configuration manager 610 may determine that the PLRSs are configured via RRC signaling. In some examples, the configuration manager 610 may determine that DCI or additional RRC signaling associated with the respective TRP index values excludes configuration information for transmitting the one or more default PLRSs.

In some examples, the configuration manager 610 may determine that the PLRSs are not configured via RRC signaling. In some examples, the configuration manager 610 may determine that DCI excludes configuration information for transmitting the one or more default PLRSs, the configuration information including SRI fields. In some examples, the configuration manager 610 may identify a set of TCI states for a physical downlink shared channel, where the DCI is part of a multiple DCI scheme for scheduling the first transmission and the second transmission of the uplink signal.

In some examples, the configuration manager 610 may identify, from the set of TCI states, transmission configuration identifiers (e.g., TCI state ID) associated with the respective TRP index values. In some examples, the configuration manager 610 may identify a set of TCI states for a PDSCH, where the DCI is part of a single DCI scheme for scheduling the first transmission and the second transmission of the uplink signal.

In some examples, the configuration manager 610 may identify, from the set of TCI states, transmission configuration identifiers associated with the respective TRP index values, where each of the transmission configuration identifiers are within a TCI codepoint for a pair of TCI states. In some examples, the configuration manager 610 may determine that additional RRC signaling associated with the respective TRP index values excludes configuration information for transmitting the one or more default PLRSs, the configuration information including spatial relationship information.

In some examples, the configuration manager 610 may determine that additional RRC signaling associated with the respective TRP index values excludes configuration information for transmitting the one or more default PLRSs, the configuration information for sounding reference signals associated with the respective TRP index values. In some examples, the configuration manager 610 may determine that one or more higher-layer parameters have not been received at the UE. In some examples, the configuration manager 610 may identify a set of TCI states for a PDSCH. In some cases, the DCI is part of a multiple DCI scheme for scheduling the first transmission and the second transmission of the uplink signal. In some cases, the transmission configuration identifiers have a lowest value of the TCI codepoint for the pair of TCI states.

The reference signal resource manager 615 may determine default PLRS resources for one or more PLRSs that are associated with the first transmission and the second transmission of the uplink signal, the default PLRS resources being based on a determination of whether PLRSs are configured, the respective TRP index values, and a resource selection rule. In some examples, the reference signal resource manager 615 may select the default PLRS resources in accordance with the resource selection rule and the respective TRP index values based on the PLRSs being configured and the configuration information being excluded.

In some examples, the reference signal resource manager 615 may identify PLRS identifier values (e.g., a PathlossReferenceRS-Id) associated with the respective TRP index values. In some cases, the PathlossReferenceRS-Id may be a lowest ID value from a set of ID values. In some examples, the reference signal resource manager 615 may select the default PLRS resources based on the PLRS identifier values, where the selected default PLRS resources include resources of a serving cell.

In some examples, the reference signal resource manager 615 may select the default PLRS resources based on the CORESET pool index values, where the default PLRS resources include periodic resources that are selected based on a spatial QCL relationship associated with the identified CORESETs.

In some examples, the configuration manager 610 may determine that the configuration information excluded from the DCI includes SRI fields associated with the respective TRP index values. In such cases, the reference signal resource manager 615 may identify a mapping between power control identifier values and PLRS identifier values that are associated with the respective TRP index values. In some examples, the reference signal resource manager 615 may select the default PLRS resources based on the PLRS identifier values and in accordance with the mapping.

In some examples, the configuration manager 610 may determine that the configuration information excluded from the additional RRC signaling includes uplink configured grant parameters, where a format of the DCI may activate the first transmission and the second transmission of the uplink signal. In some examples, the reference signal resource manager 615 may identify a mapping between SRI fields associated with the respective TRP index values and PLRS indicator values. In some examples, the reference signal resource manager 615 may select the default PLRS resources based on the PLRS identifier values and in accordance with the mapping, where the selected default PLRS resources include resources of a serving cell.

In some examples, the configuration manager 610 may determine that the configuration information excluded from the additional RRC signaling includes one or more configured grant parameters, where a format of the DCI may activate the first transmission and the second transmission of the uplink signal. In such cases, the reference signal resource manager 615 may identify PLRS identifier values associated with the respective TRP index values. In some examples, the reference signal resource manager 615 may select the default PLRS resources based on the PLRS identifier values, where the selected default PLRS resources include resources of a serving cell.

In some examples, the reference signal resource manager 615 may select the default PLRS resources in accordance with the resource selection rule and the respective TRP index values based on the PLRSs not being configured and the configuration information being excluded. In some examples, the reference signal resource manager 615 may select the default PLRS resources based on the transmission configuration identifiers, where CORESETs associated with the respective TRP index values are in a downlink BWP that is different from an active downlink BWP.

In some examples, the reference signal resource manager 615 may select the default PLRS resources in accordance with the resource selection rule and the respective TRP index values based on the PLRSs being configured and the configuration information being excluded. In some examples, selecting the default PLRS resources in accordance with the resource selection rule includes identifying PLRS identifier values associated with the respective TRP index values, and selecting the default PLRS resources based on the PLRS identifier values, where the selected default PLRS resources include resources of a serving cell.

In some examples, selecting the default PLRS resources in accordance with the resource selection rule includes identifying a set of CORESETs for monitoring for DCI, identifying CORESETs from the plurality of CORESETs having CORESET pool index values associated with the respective TRP index values, and selecting the default PLRS resources based on the CORESET pool index values, where the default PLRS resources include periodic resources that are selected based on a spatial QCL relationship associated with the identified CORESETs.

In some examples, selecting the default PLRS resources in accordance with the resource selection rule and the respective TRP index values based on the one or more higher-layer parameters not being received, where selecting the default PLRS resources in accordance with the resource selection rule includes identifying an SSB used to receive an MIB associated with the respective TRP index values, and selecting the default PLRS resources based on the identified SSB.

In some examples, the reference signal resource manager 615 may select the default PLRS resources based on the lowest CORESET pool index values, where the default PLRS resources include periodic resources that are selected based on a spatial quasi co-location relationship associated with the identified CORESETs. In some examples, the reference signal resource manager 615 may determine that the PLRSs are not configured for the first transmission and the second transmission of the uplink signal, where the first transmission and the second transmission of the uplink signal are based on DCI received in accordance with a single DCI scheme.

In some examples, the reference signal resource manager 615 may select the default PLRS resources in accordance with the resource selection rule and the respective TRP index values based on the PLRSs not being configured. In some examples, the reference signal resource manager 615 may determine, for the first transmission of the uplink signal, a first set of periodic reference signal resources based on a first TCI identifier value from a first pair of TCIs.

In some examples, the reference signal resource manager 615 may determine, for the second transmission of the uplink signal, a second set of periodic reference signal resources based on a second TCI identifier value from a second pair of TCIs. In some examples, the reference signal resource manager 615 may select the default PLRS resources based on the first set of periodic reference signal resources and the second set of periodic reference signal resources.

In some examples, the reference signal resource manager 615 may determine, for the first transmission and the second transmission of the uplink signal, a set of periodic reference signal resources based on a pair of TCIs from a set of pairs of TCIs. In some examples, the reference signal resource manager 615 may select the default PLRS resources based on the set of periodic reference signal resources.

In some examples, the reference signal resource manager 615 may determine, for the first transmission and the second transmission of the uplink signal, a first set of reference signal resources that are based on single-panel transmissions and a second set of reference signal resources that are based on a predefined mapping between the first set of reference signal resources and the second set of reference signal resources. In some examples, the reference signal resource manager 615 may select the default PLRS resources based on the first set of reference signal resources, or the second set of reference signal resources, or any combination thereof. In some cases, each of the PLRS identifier values includes a lowest PLRS identifier value associated with the respective TRP index values.

In some cases, the DCI is part of a single DCI scheme for scheduling the first transmission and the second transmission of the uplink signal. In some cases, the first TCI identifier value is a lowest TCI identifier value of the first pair of TCIs, and where the second TCI identifier value is a lowest TCI identifier value of the second pair of TCIs. In some cases, the pair of TCIs have a lowest sum of TCI identifier values, or have a highest sum of TCI identifier values, or correspond to a first TCI codepoint having multiple TCI states. In some cases, the predefined mapping is based on one or more pairs of TCI states. In some cases, the uplink signal includes data over a physical uplink shared channel, or control information over a physical uplink control channel, or a sounding reference signal.

The scheduling manager 620 may transmit the one or more PLRSs using the default PLRS resources. The resource set manager 625 may identify a set of CORESETs for monitoring for the DCI. In some examples, the resource set manager 625 may identify CORESETs from the set of CORESETs having CORESET pool index values associated with the respective TRP index values.

In some examples, the resource set manager 625 may identify a set of CORESETs for monitoring for the DCI, where the DCI is part of a multiple DCI scheme for scheduling the first transmission and the second transmission of the uplink signal. In some examples, the resource set manager 625 may identify CORESETs from the set of CORESETs having CORESET pool index values associated with the respective TRP index values, where the identified CORESETs are within an active downlink BWP.

In some examples, the resource set manager 625 may identify a set of CORESETs for monitoring for the DCI, where the DCI is part of a single DCI scheme for scheduling the first transmission and the second transmission of the uplink signal. In some examples, the resource set manager 625 may identify a set of CORESETs for monitoring for DCI.

In some examples, the resource set manager 625 may identify CORESETs from the set of CORESETs having lowest CORESET pool index values associated with the respective TRP index values, where the identified CORESETs are within an active downlink BWP. In some cases, the CORESETs having the CORESET pool index values associated with the respective TRP index values are in an active downlink part of a scheduling cell. In some cases, the CORESETs having the CORESET pool index values associated with the respective TRP index values are in an active downlink part of a primary cell, and where the configuration information excluded from the DCI includes spatial beam information on an active uplink BWP of the primary cell.

**FIG.** 7 shows a diagram of a system 700 including a device 705 that supports default pathloss reference signals for multi-panel uplink transmissions in accordance with aspects of the present disclosure. The device 705 may be an example of or include the components of device 405, device 505, or a UE 115 as described herein. The device 705 may include components for bi-directional voice and data communications including components for transmitting and receiving communications, including a communications manager 710, an I/O controller 715, a transceiver 720, an antenna 725, memory 730, and a processor 740. These components may be in electronic communication via one or more buses (e.g., bus 745).

The communications manager 710 may identify (e.g., for a UE) respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel. The communications manager 710 may determine default PLRS resources for one or more PLRSs that are associated with the first transmission and the second transmission of the uplink signal, the default PLRS resources being based on a determination of whether PLRSs are configured, the respective TRP index values, and a resource selection rule. In some cases, the communications manager 710 may transmit the one or more PLRSs using the default PLRS resources.

The I/O controller 715 may manage input and output signals for the device 705. The I/O controller 715 may also manage peripherals not integrated into the device 705. In some cases, the I/O controller 715 may represent a physical connection or port to an external peripheral. In some cases, the I/O controller 715 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 715 may represent or interact with a modem, a keyboard, a mouse, a touchscreen, or a similar device. In some cases, the I/O controller 715 may be implemented as part of a processor. In some cases, a user may interact with the device 705 via the I/O controller 715 or via hardware components controlled by the I/O controller 715.

The transceiver 720 may communicate bi-directionally, via one or more antennas, wired, or wireless links as described above. For example, the transceiver 720 may represent a wireless transceiver and may communicate bi-directionally with another wireless transceiver. The transceiver 720 may also include a modem to modulate the packets and provide the modulated packets to the antennas for transmission, and to demodulate packets received from the antennas. In some cases, the device 705 may include a single antenna 725. However, in some cases the device may have more than one antenna 725, which may be capable of concurrently transmitting or receiving multiple wireless transmissions. In some examples, the device 705 may include one or more antenna panels or antenna arrays that include a set of antenna elements.

The memory 730 may include random-access memory (RAM) and read-only memory (ROM). The memory 730 may store computer-readable, computer-executable code 735 including instructions that, when executed, cause the processor to perform various functions described herein. In some cases, the memory 730 may contain, among other things, a basic input/output system (BIOS) which may control basic hardware or software operation such as the interaction with peripheral components or devices.

The processor 740 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 740 may be configured to operate a memory array using a memory controller. In other cases, a memory controller may be integrated into the processor 740. The processor 740 may be configured to execute computer-readable instructions stored in a memory (e.g., the memory 730) to cause the device 705 to perform various functions (e.g., functions or tasks supporting default pathloss reference signals for multi-panel uplink transmissions).

The code 735 may include instructions to implement aspects of the present disclosure, including instructions to support wireless communications. The code 735 may be stored in a non-transitory computer-readable medium such as system memory or other type of memory. In some cases, the code 735 may not be directly executable by the processor 740 but may cause a computer (e.g., when compiled and executed) to perform functions described herein.

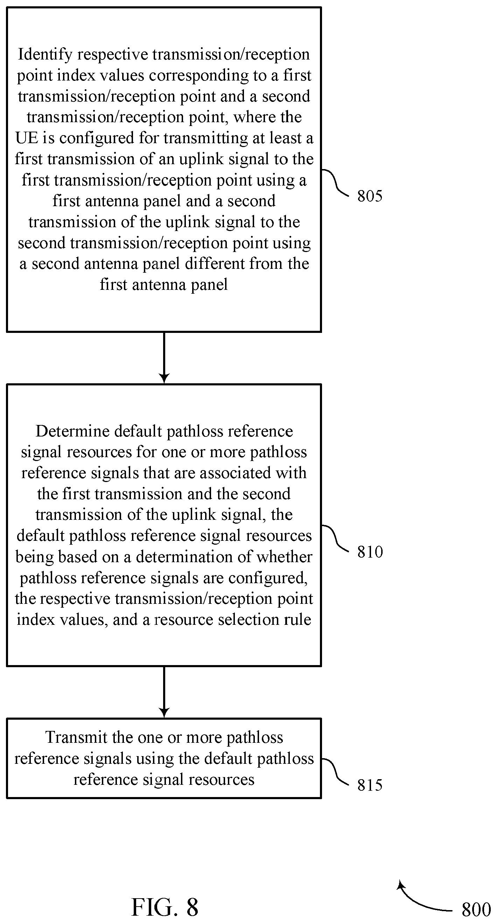

**FIG.** 8 shows a flowchart illustrating a method 800 that supports default pathloss reference signals for multi-panel uplink transmissions in accordance with aspects of the present disclosure. The operations of method 800 may be implemented by a UE 115 or its components as described herein. For example, the operations of method 800 may be performed by a communications manager as described with reference to FIGs. 4 through 7. In some examples, a UE may execute a set of instructions to control the functional elements of the UE to perform the functions described below. Additionally or alternatively, a UE may perform aspects of the functions described below using special-purpose hardware.

At 805, the UE may identify respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel. The operations of 805 may be performed according to the methods described herein. In some examples, aspects of the operations of 805 may be performed by a configuration manager as described with reference to FIGs. 4 through 7.

At 810, the UE may determine default PLRS resources for one or more PLRSs that are associated with the first transmission and the second transmission of the uplink signal, the default PLRS resources being based on a determination of whether PLRSs are configured, the respective TRP index values, and a resource selection rule. The operations of 810 may be performed according to the methods described herein. In some examples, aspects of the operations of 810 may be performed by a reference signal resource manager as described with reference to FIGs. 4 through 7.

At 815, the UE may transmit the one or more PLRSs using the default PLRS resources. The operations of 815 may be performed according to the methods described herein. In some examples, aspects of the operations of 815 may be performed by a scheduling manager as described with reference to FIGs. 4 through 7.

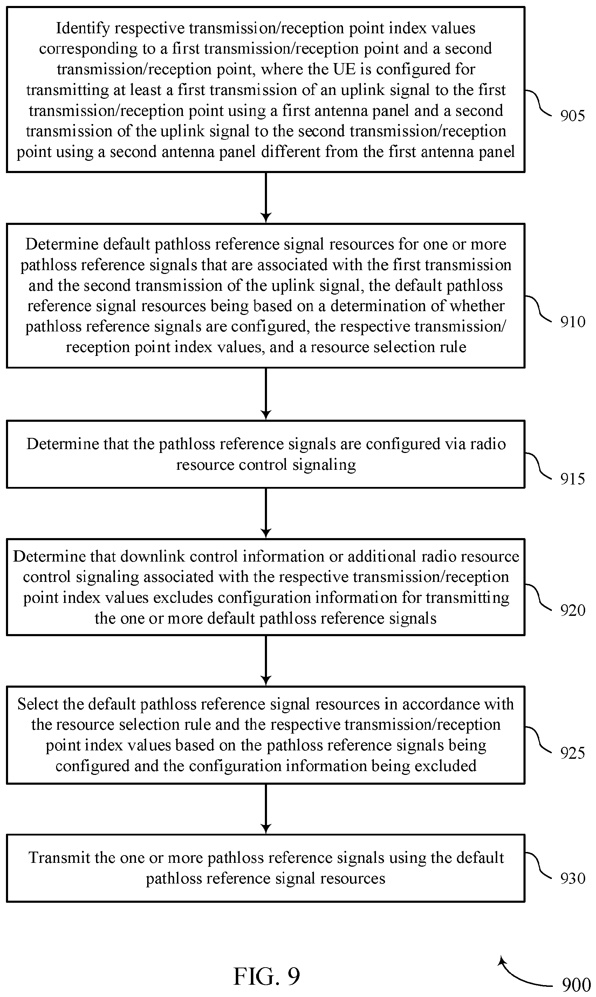

FIG. 9 shows a flowchart illustrating a method 900 that supports default pathloss reference signals for multi-panel uplink transmissions in accordance with the invention. The operations of method 900 may be implemented by a UE 115 or its components as described herein. For example, the operations of method 900 may be performed by a communications manager as described with reference to FIGs. 4 through 7. In some examples, a UE may execute a set of instructions to control the functional elements of the UE to perform the functions described below. Additionally or alternatively, a UE may perform aspects of the functions described below using special-purpose hardware.

At 905, the UE may identify respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel. The operations of 905 may be performed according to the methods described herein. In some examples, aspects of the operations of 905 may be performed by a configuration manager as described with reference to FIGs. 4 through 7.

At 910, the UE may determine default PLRS resources for one or more PLRSs that are associated with the first transmission and the second transmission of the uplink signal, the default PLRS resources being based on a determination of whether PLRSs are configured, the respective TRP index values, and a resource selection rule. The operations of 910 may be performed according to the methods described herein. In some examples, aspects of the operations of 910 may be performed by a reference signal resource manager as described with reference to FIGs. 4 through 7.

At 915, the UE may determine that the PLRSs are configured via RRC signaling. The operations of 915 may be performed according to the methods described herein. In some examples, aspects of the operations of 915 may be performed by a configuration manager as described with reference to FIGs. 4 through 7.

At 920, the UE may determine that DCI or additional RRC signaling associated with the respective TRP index values excludes configuration information for transmitting the one or more default PLRSs. The operations of 920 may be performed according to the methods described herein. In some examples, aspects of the operations of 920 may be performed by a configuration manager as described with reference to FIGs. 4 through 7.

At 925, the UE may select the default PLRS resources in accordance with the resource selection rule and the respective TRP index values based on the PLRSs being configured and the configuration information being excluded. The operations of 925 may be performed according to the methods described herein. In some examples, aspects of the operations of 925 may be performed by a reference signal resource manager as described with reference to FIGs. 4 through 7.

At 930, the UE may transmit the one or more PLRSs using the default PLRS resources. The operations of 930 may be performed according to the methods described herein. In some examples, aspects of the operations of 930 may be performed by a scheduling manager as described with reference to FIGs. 4 through 7.

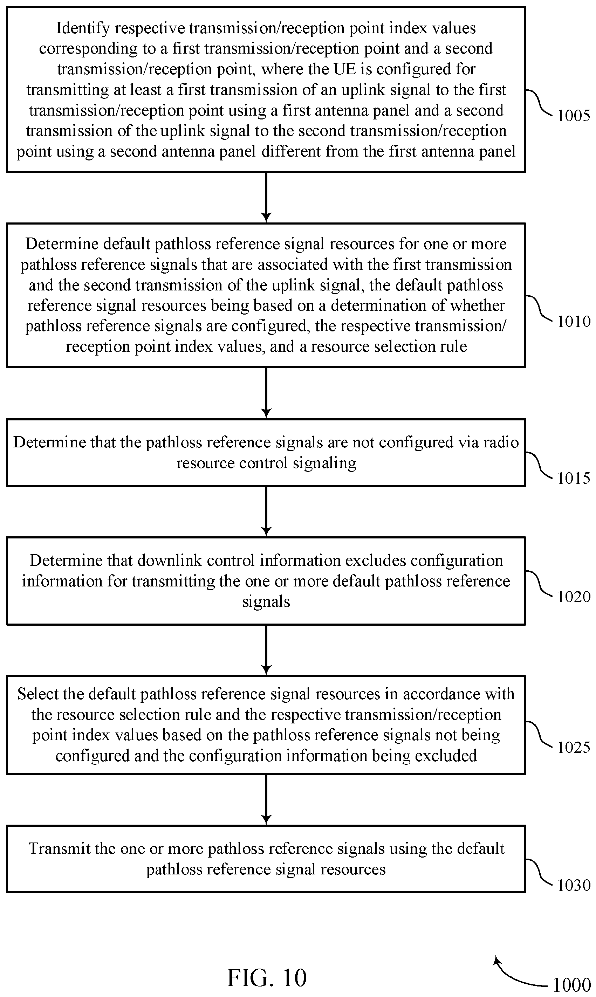

FIG. 10 shows a flowchart illustrating a method 1000 , which is not part of the invention, that supports default pathloss reference signals for multi-panel uplink transmissions in accordance with aspects of the present disclosure. The operations of method 1000 may be implemented by a UE 115 or its components as described herein. For example, the operations of method 1000 may be performed by a communications manager as described with reference to FIGs. 4 through 7. In some examples, a UE may execute a set of instructions to control the functional elements of the UE to perform the functions described below. Additionally or alternatively, a UE may perform aspects of the functions described below using special-purpose hardware.

At 1005, the UE may identify respective TRP index values corresponding to a first TRP and a second TRP, where the UE is configured for transmitting at least a first transmission of an uplink signal to the first TRP using a first antenna panel and a second transmission of the uplink signal to the second TRP using a second antenna panel different from the first antenna panel. The operations of 1005 may be performed according to the methods described herein. In some examples, aspects of the operations of 1005 may be performed by a configuration manager as described with reference to FIGs. 4 through 7.

At 1010, the UE may determine default PLRS resources for one or more PLRSs that are associated with the first transmission and the second transmission of the uplink signal, the default PLRS resources being based on a determination of whether PLRSs are configured, the respective TRP index values, and a resource selection rule. The operations of 1010 may be performed according to the methods described herein. In some examples, aspects of the operations of 1010 may be performed by a reference signal resource manager as described with reference to FIGs. 4 through 7.

At 1015, the UE may determine that the PLRSs are not configured via RRC signaling. The operations of 1015 may be performed according to the methods described herein. In some examples, aspects of the operations of 1015 may be performed by a configuration manager as described with reference to FIGs. 4 through 7.

At 1020, the UE may determine that DCI excludes configuration information for transmitting the one or more default PLRSs. The operations of 1020 may be performed according to the methods described herein. In some examples, aspects of the operations of 1020 may be performed by a configuration manager as described with reference to FIGs. 4 through 7.

At 1025, the UE may select the default PLRS resources in accordance with the resource selection rule and the respective TRP index values based on the PLRSs not being configured and the configuration information being excluded. The operations of 1025 may be performed according to the methods described herein. In some examples, aspects of the operations of 1025 may be performed by a reference signal resource manager as described with reference to FIGs. 4 through 7.

At 1030, the UE may transmit the one or more PLRSs using the default PLRS resources. The operations of 1030 may be performed according to the methods described herein. In some examples, aspects of the operations of 1030 may be performed by a scheduling manager as described with reference to FIGs. 4 through 7.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein, but is to be accorded the broadest scope consistent with the claims.

## Claims

1. A method (800; 900) for wireless communication at a user equipment, UE, comprising:
identifying (805; 905) respective transmission/reception point index values corresponding to a first transmission/reception point and a second transmission/reception point, wherein the UE is configured for transmitting at least a first transmission of an uplink signal to the first transmission/reception point using a first antenna panel and a second transmission of the uplink signal to the second transmission/reception point using a second antenna panel different from the first antenna panel;
determining (810; 910) default pathloss reference signal resources for one or more pathloss reference signals that are associated with the first transmission and the second transmission of the uplink signal, the default pathloss reference signal resources being based at least in part on a determination of whether pathloss reference signals are configured, the respective transmission/reception point index values, and a resource selection rule; wherein determining the default pathloss reference signals resources comprises:
determining (915) that the pathloss reference signals are configured via radio resource control signaling;
determining (920) that downlink control information or additional radio resource control signaling associated with the respective transmission/reception point index values excludes configuration information for transmitting the one or more default pathloss reference signals; and
selecting (925) the default pathloss reference signal resources in accordance with the resource selection rule and the respective transmission/reception point index values based at least in part on the pathloss reference signals being configured and the configuration information being excluded; further comprising:
transmitting (815; 930) the one or more pathloss reference signals using the default pathloss reference signal resources, wherein the pathloss reference signals are usable to determine pathloss of one or more communication links.

2. The method of claim 1, wherein selecting the default pathloss reference signal resources in accordance with the resource selection rule comprises:
identifying pathloss reference signal identifier values associated with the respective transmission/reception point index values; and
selecting the default pathloss reference signal resources based at least in part on the pathloss reference signal identifier values, wherein the selected default pathloss reference signal resources comprise resources of a serving cell.

3. The method of claim 2, wherein each of the pathloss reference signal identifier values comprises a lowest pathloss reference signal identifier value associated with the respective transmission/reception point index values.

4. The method of claim 1, wherein selecting the default pathloss reference signal resources in accordance with the resource selection rule comprises:
identifying a plurality of control resource sets for monitoring for the downlink control information;
identifying control resource sets from the plurality of control resource sets having control resource set pool index values associated with the respective transmission/reception point index values; and
selecting the default pathloss reference signal resources based at least in part on the control resource set pool index values, wherein the default pathloss reference signal resources comprise periodic resources that are selected based at least in part on a spatial quasi co-location relationship associated with the identified control resource sets.

5. The method of claim 4, wherein the control resource sets having the control resource set pool index values associated with the respective transmission/reception point index values are in an active downlink part of a scheduling cell.

6. The method of claim 4, wherein the control resource sets having the control resource set pool index values associated with the respective transmission/reception point index values are in an active downlink part of a primary cell, and wherein the configuration information excluded from the downlink control information comprises spatial beam information on an active uplink bandwidth part of the primary cell.

7. The method of claim 1, further comprising:
determining that the configuration information excluded from the downlink control information comprises sounding reference signal resource indicator fields associated with the respective transmission/reception point index values, wherein selecting the default pathloss reference signal resources in accordance with the resource selection rule comprises:
identifying a mapping between power control identifier values and pathloss reference signal identifier values that are associated with the respective transmission/reception point index values; and
selecting the default pathloss reference signal resources based at least in part on the pathloss reference signal identifier values and in accordance with the mapping.

8. The method of claim 1, wherein the downlink control information is part of a multiple downlink control information scheme for scheduling the first transmission and the second transmission of the uplink signal.

9. The method of claim 1, further comprising:
determining that the configuration information excluded from the additional radio resource control signaling comprises uplink configured grant parameters, a format of the downlink control information activating the first transmission and the second transmission of the uplink signal, wherein selecting the default pathloss reference signal resources in accordance with the resource selection rule comprises:
identifying a mapping between sounding reference signal resource indicator fields associated with the respective transmission/reception point index values and pathloss reference signal indicator values; and
selecting the default pathloss reference signal resources based at least in part on the pathloss reference signal identifier values and in accordance with the mapping, wherein the selected default pathloss reference signal resources comprise resources of a serving cell.

10. The method of claim 1, further comprising:
determining that the configuration information excluded from the additional radio resource control signaling comprises one or more configured grant parameters, a format of the downlink control information activating the first transmission and the second transmission of the uplink signal, wherein selecting the default pathloss reference signal resources in accordance with the resource selection rule comprises:
identifying pathloss reference signal identifier values associated with the respective transmission/reception point index values; and
selecting the default pathloss reference signal resources based at least in part on the pathloss reference signal identifier values, wherein the selected default pathloss reference signal resources comprise resources of a serving cell.

11. An apparatus for wireless communication at a user equipment, UE, comprising:
means for identifying respective transmission/reception point index values corresponding to a first transmission/reception point and a second transmission/reception point, wherein the UE is configured for transmitting at least a first transmission of an uplink signal to the first transmission/reception point using a first antenna panel and a second transmission of the uplink signal to the second transmission/reception point using a second antenna panel different from the first antenna panel;
means for determining default pathloss reference signal resources for one or more pathloss reference signals that are associated with the first transmission and the second transmission of the uplink signal, the default pathloss reference signal resources being based at least in part on a determination of whether pathloss reference signals are configured, the respective transmission/reception point index values, and a resource selection rule; wherein the means for determining the default pathloss reference signals resources comprises:
means for determining that the pathloss reference signals are configured via radio resource control signaling;
means for determining that downlink control information or additional radio resource control signaling associated with the respective transmission/reception point index values excludes configuration information for transmitting the one or more default pathloss reference signals; and
means for selecting the default pathloss reference signal resources in accordance with the resource selection rule and the respective transmission/reception point index values based at least in part on the pathloss reference signals being configured and the configuration information being excluded; further comprising:
means for transmitting the one or more pathloss reference signals using the default pathloss reference signal resources, wherein the pathloss reference signals are usable to determine pathloss of one or more communication links.

12. The apparatus of claim 11, further comprising:
means for carrying out the method of any of claims 2 to 10.

13. A computer program comprising instructions which,
when the instructions are executed by a processor of an apparatus for wireless communication at a user equipment, UE, cause said UE to carry out the method of any of claims 1 to 10.

## Patentansprüche

1. Verfahren (800; 900) zur drahtlosen Kommunikation an einem Benutzergerät, UE, umfassend:
Identifizieren (805; 905) jeweiliger Sende-/Empfangspunkt-Indexwerte, die einem ersten Sende-/Empfangspunkt und einem zweiten Sende-/Empfangspunkt entsprechen, wobei das UE zum Senden mindestens einer ersten Sendung eines Uplink-Signals an den ersten Sende-/Empfangspunkt unter Verwendung eines ersten Antennenpanels und einer zweiten Sendung des Uplink-Signals an den zweiten Sende-/Empfangspunkt unter Verwendung eines zweiten Antennenpanels, das sich vom dem ersten Antennenpanel unterscheidet, konfiguriert ist;
Bestimmen (810; 910) von Standard-Pfadverlust-Referenzsignalressourcen für ein oder mehrere Pfadverlust-Referenzsignale, die der ersten Sendung und der zweiten Sendung des Uplink-Signals zugeordnet sind, wobei die Standard-Pfadverlust-Referenzsignalressourcen mindestens teilweise auf einer Bestimmung, ob Pfadverlust-Referenzsignale konfiguriert sind, den jeweiligen Sende-/Empfangspunkt-Indexwerten und einer Ressourcenauswahlregel basieren; wobei das Bestimmen der Standard-Pfadverlust-Referenzsignalressourcen umfasst:
Bestimmen (915), dass die Pfadverlust-Referenzsignale über Funkressourcen-Steuersignalisierung konfiguriert sind;
Bestimmen (920), dass Downlink-Steuerinformation oder zusätzliche Funkressourcen-Steuersignalisierung, die den jeweiligen Sende-/Empfangspunkt-Indexwerten zugeordnet ist, Konfigurationsinformation zum Senden des einen oder der mehreren Standard-Pfadverlust-Referenzsignale ausschließt; und
Auswählen (925) der Standard-Pfadverlust-Referenzsignalressourcen gemäß der Ressourcenauswahlregel und den jeweiligen Sende-/Empfangspunkt-Indexwerten basierend mindestens teilweise darauf, dass die Pfadverlust-Referenzsignale konfiguriert sind und die Konfigurationsinformation ausgeschlossen ist; ferner umfassend:
Senden (815; 930) des einen oder der mehreren Pfadverlust-Referenzsignale unter Verwendung der Standard-Pfadverlust-Referenzsignalressourcen, wobei die Pfadverlust-Referenzsignale verwendbar sind, um den Pfadverlust einer oder mehrerer Kommunikationsverbindungen zu bestimmen.

2. Verfahren nach Anspruch 1, wobei das Auswählen der Standard-Pfadverlust-Referenzsignalressourcen gemäß der Ressourcenauswahlregel umfasst:
Identifizieren von Pfadverlust-Referenzsignal-Kennungswerten, die den jeweiligen Sende-/Empfangspunkt-Indexwerten zugeordnet sind; und
Auswählen der Standard-Pfadverlust-Referenzsignalressourcen basierend mindestens teilweise auf den Pfadverlust-Referenzsignal-Kennungswerten, wobei die ausgewählten Standard-Pfadverlust-Referenzsignalressourcen Ressourcen einer bedienenden Zelle umfassen.

3. Verfahren nach Anspruch 2, wobei jeder der Pfadverlust-Referenzsignal-Kennungswerte einen niedrigsten Pfadverlust-Referenzsignal-Kennungswert umfasst, der den jeweiligen Sende-/Empfangspunkt-Indexwerten zugeordnet ist.

4. Verfahren nach Anspruch 1, wobei das Auswählen der Standard-Pfadverlust-Referenzsignalressourcen gemäß der Ressourcenauswahlregel umfasst:
Identifizieren einer Vielzahl von Steuerressourcensätzen zum Überwachen für die Downlink-Steuerinformation;
Identifizieren von Steuerressourcensätzen aus der Vielzahl von Steuerressourcensätzen mit Steuerressourcensatz-Poolindexwerten, die den jeweiligen Sende-/Empfangspunkt-Indexwerten zugeordnet sind; und
Auswählen der Standard-Pfadverlust-Referenzsignalressourcen basierend mindestens teilweise auf den Steuerressourcensatz-Poolindexwerten, wobei die Standard-Pfadverlust-Referenzsignalressourcen periodische Ressourcen umfassen, die basierend mindestens teilweise auf einer räumlichen Quasi-Colocation-Beziehung ausgewählt werden, die den identifizierten Steuerressourcensätzen zugeordnet ist.

5. Verfahren nach Anspruch 4, wobei die Steuerressourcensätze mit den Steuerressourcensatz-Poolindexwerten, die den jeweiligen Sende-/Empfangspunkt-Indexwerten zugeordnet sind, in einem aktiven Downlink-Teil einer Planungszelle sind.

6. Verfahren nach Anspruch 4, wobei die Steuerressourcensätze mit den Steuerressourcensatz-Poolindexwerten, die den jeweiligen Sende-/Empfangspunkt-Indexwerten zugeordnet sind, in einem aktiven Downlink-Teil einer Primärzelle sind, und wobei die Konfigurationsinformation, die von der Downlink-Steuerinformation ausgeschlossen ist, räumliche Strahlinformation auf einem aktiven Uplink-Bandbreitenteil der Primärzelle umfasst.

7. Verfahren nach Anspruch 1, ferner umfassend:
Bestimmen, dass die Konfigurationsinformation, die von der Downlink-Steuerinformation ausgeschlossen ist, Sondierungsreferenzsignal-Ressourcenindikatorfelder umfasst, die den jeweiligen Sende-/Empfangspunkt-Indexwerten zugeordnet sind, wobei das Auswählen der Standard-Pfadverlust-Referenzsignalressourcen gemäß der Ressourcenauswahlregel umfasst:
Identifizieren einer Zuordnung zwischen Leistungssteuerkennungswerten und Pfadverlust-Referenzsignal-Kennungswerten, die den jeweiligen Sende-/Empfangspunkt-Indexwerten zugeordnet sind; und
Auswählen der Standard-Pfadverlust-Referenzsignalressourcen basierend mindestens teilweise auf den Pfadverlust-Referenzsignal-Kennungswerten und gemäß der Zuordnung.

8. Verfahren nach Anspruch 1, wobei die Downlink-Steuerinformation Teil eines Mehrfach-Downlink-Steuerinformationsschemas zum Planen der ersten Übertragung und der zweiten Übertragung des Uplink-Signals ist.

9. Verfahren nach Anspruch 1, ferner umfassend:
Bestimmen, dass die Konfigurationsinformation, die von der zusätzlichen Funkressourcen-Steuersignalisierung ausgeschlossen ist, Uplink-konfigurierte Gewährungsparameter umfasst, wobei ein Format der Downlink-Steuerinformation die erste Sendung und die zweite Sendung des Uplink-Signals aktiviert, wobei das Auswählen der Standard-Pfadverlust-Referenzsignalressourcen gemäß der Ressourcenauswahlregel umfasst:
Identifizieren einer Zuordnung zwischen Sondierungsreferenzsignal-Ressourcenindikatorfeldern, die den jeweiligen Sende-/Empfangspunkt-Indexwerten zugeordnet sind, und Pfadverlust-Referenzsignal-Indikatorwerten; und
Auswählen der Standard-Pfadverlust-Referenzsignalressourcen basierend mindestens teilweise auf den Pfadverlust-Referenzsignal-Kennungswerten und gemäß der Zuordnung, wobei die ausgewählten Standard-Pfadverlust-Referenzsignalressourcen Ressourcen einer bedienenden Zelle umfassen.

10. Verfahren nach Anspruch 1, ferner umfassend:
Bestimmen, dass die Konfigurationsinformation, die von der zusätzlichen Funkressourcen-Steuersignalisierung ausgeschlossen ist, einen oder mehrere konfigurierte Gewährungsparameter umfasst, wobei ein Format der Downlink-Steuerinformation die erste Sendung und die zweite Sendung des Uplink-Signals aktiviert, wobei das Auswählen der Standard-Pfadverlust-Referenzsignalressourcen gemäß der Ressourcenauswahlregel umfasst:
Identifizieren von Pfadverlust-Referenzsignal-Kennungswerten, die den jeweiligen Sende-/Empfangspunkt-Indexwerten zugeordnet sind; und
Auswählen der Standard-Pfadverlust-Referenzsignalressourcen basierend mindestens teilweise auf den Pfadverlust-Referenzsignal-Kennungswerten, wobei die ausgewählten Standard-Pfadverlust-Referenzsignalressourcen Ressourcen einer bedienenden Zelle umfassen.

11. Vorrichtung zur drahtlosen Kommunikation an einem Benutzergerät, UE, umfassend:
Mittel zum Identifizieren jeweiliger Sende-/Empfangspunkt-Indexwerte, die einem ersten Sende-/Empfangspunkt und einem zweiten Sende-/Empfangspunkt entsprechen, wobei das UE zum Senden mindestens einer ersten Sendung eines Uplink-Signals an den ersten Sende-/Empfangspunkt unter Verwendung eines ersten Antennenpanels und einer zweiten Sendung des Uplink-Signals an den zweiten Sende-/Empfangspunkt unter Verwendung eines zweiten Antennenpanels, das sich vom dem ersten Antennenpanel unterscheidet, konfiguriert ist;
Mittel zum Bestimmen von Standard-Pfadverlust-Referenzsignalressourcen für ein oder mehrere Pfadverlust-Referenzsignale, die der ersten Sendung und der zweiten Sendung des Uplink-Signals zugeordnet sind, wobei die Standard-Pfadverlust-Referenzsignalressourcen mindestens teilweise auf einer Bestimmung, ob Pfadverlust-Referenzsignale konfiguriert sind, den jeweiligen Sende-/Empfangspunkt-Indexwerten und einer Ressourcenauswahlregel basieren; wobei das Mittel zum Bestimmen der Standard-Pfadverlust-Referenzsignalressourcen umfasst:
Mittel zum Bestimmen, dass die Pfadverlust-Referenzsignale über Funkressourcen-Steuersignalisierung konfiguriert sind;
Mittel zum Bestimmen, dass Downlink-Steuerinformation oder zusätzliche Funkressourcen-Steuersignalisierung, die den jeweiligen Sende-/Empfangspunkt-Indexwerten zugeordnet ist, Konfigurationsinformation zum Senden des einen oder der mehreren Standard-Pfadverlust-Referenzsignale ausschließt; und
Mittel zum Auswählen der Standard-Pfadverlust-Referenzsignalressourcen gemäß der Ressourcenauswahlregel und den jeweiligen Sende-/Empfangspunkt-Indexwerten basierend mindestens teilweise darauf, dass die Pfadverlust-Referenzsignale konfiguriert sind und die Konfigurationsinformation ausgeschlossen ist; ferner umfassend:
Mittel zum Senden des einen oder der mehreren Pfadverlust-Referenzsignale unter Verwendung der Standard-Pfadverlust-Referenzsignalressourcen, wobei die Pfadverlust-Referenzsignale verwendbar sind, um den Pfadverlust einer oder mehrerer Kommunikationsverbindungen zu bestimmen.

12. Vorrichtung nach Anspruch 11, ferner umfassend:
Mittel zum Ausführen des Verfahrens nach einem der Ansprüche 2 bis 10.

13. Computerprogramm, umfassend Anweisungen, die,
wenn die Anweisungen von einem Prozessor einer Vorrichtung zur drahtlosen Kommunikation an einem Benutzergerät, UE, ausgeführt werden, das UE veranlassen, das Verfahren nach einem der Ansprüche 1 bis 10 auszuführen.

## Revendications

1. Un procédé (800 ; 900) de communication sans fil au niveau d'un équipement utilisateur, UE, comprenant :
l'identification (805 ; 905) de valeurs d'indice de point d'émission/réception respectives correspondant à un premier point d'émission/réception et à un second point d'émission/réception, dans lequel l'UE est configuré pour transmettre au moins une première transmission d'un signal de liaison montante au premier point d'émission/réception en utilisant un premier panneau d'antenne et une seconde transmission du signal de liaison montante au second point d'émission/réception en utilisant un second panneau d'antenne différent du premier panneau d'antenne ;
la détermination (810 ; 910) de ressources de signal de référence de pertes de propagation par défaut pour un ou plusieurs signaux de référence de pertes de propagation qui sont associés à la première transmission et à la seconde transmission du signal de liaison montante, les ressources de signal de référence de pertes de propagation par défaut étant basées au moins en partie sur une détermination si des signaux de référence de pertes de propagation sont configurés, les valeurs d'indice de point d'émission/réception respectives et une règle de sélection de ressources ; dans lequel la détermination des ressources de signaux de référence de pertes de propagation par défaut comprend :
la détermination (915) que les signaux de référence de pertes de propagation sont configurés via une signalisation de contrôle de ressource radio ;
la détermination (920) qu'une information de contrôle de liaison descendante ou une signalisation de contrôle de ressources radio supplémentaires associée aux valeurs d'indice de point de transmission/réception respectives exclut des informations de configuration pour la transmission des un ou plusieurs signaux de référence de pertes de propagation par défaut ; et
la sélection (925) des ressources de signal de référence de pertes de propagation par défaut conformément à la règle de sélection de ressources et aux valeurs d'indice de point d'émission/réception respectives sur la base au moins en partie des signaux de référence de pertes de propagation configurés et des informations de configuration qui sont exclus ; comprenant en outre :
la transmission (815 ; 930) des un ou plusieurs signaux de référence de pertes de propagation en utilisant les ressources de signal de référence de pertes de propagation par défaut, dans lequel les signaux de référence de pertes de propagation sont utilisables pour déterminer les pertes de propagation d'une ou plusieurs liaisons de communication.

2. Le procédé selon la revendication 1, dans lequel la sélection des ressources de signal de référence de pertes de propagation par défaut conformément à la règle de sélection de ressources comprend :
l'identification de valeurs d'identifiant de signal de référence de pertes de propagation associées aux valeurs d'indice de point d'émission/réception respectives ; et
la sélection des ressources de signal de référence de pertes de propagation par défaut sur la base au moins en partie des valeurs d'identifiant de signal de référence de pertes de propagation, dans lequel les ressources de signal de référence de pertes de propagation par défaut sélectionnées comprennent des ressources d'une cellule de desserte.

3. Le procédé selon la revendication 2, dans lequel chacune des valeurs d'identifiant de signal de référence de pertes de propagation comprend une valeur d'identifiant de signal de référence de pertes de propagation la plus faible associée aux valeurs d'indice de point d'émission/réception respectives.

4. Le procédé selon la revendication 1, dans lequel la sélection des ressources de signal de référence de pertes de propagation par défaut conformément à la règle de sélection de ressources comprend :
l'identification d'une pluralité d'ensembles de ressources de contrôle pour la surveillance des informations de contrôle de la liaison descendante ;
l'identification, parmi la pluralité d'ensembles de ressources de contrôle, d'ensembles de ressources de contrôle ayant des valeurs d'indice de groupe d'ensembles de ressources de contrôle associées aux valeurs d'indice de point d'émission/réception respectives ; et
la sélection des ressources de signal de référence de pertes de propagation par défaut sur la base au moins en partie des valeurs d'indice de groupe d'ensembles de ressources de contrôle, dans lequel les ressources de signal de référence de pertes de propagation par défaut comprennent des ressources périodiques qui sont sélectionnées sur la base au moins en partie d'une relation de quasi-colocalisation spatiale associée aux ensembles de ressources de contrôle identifiés.

5. Le procédé selon la revendication 4, dans lequel les ensembles de ressources de contrôle ayant les valeurs d'indice de groupe d'ensemble de ressources de contrôle associées aux valeurs d'indice de point d'émission/réception respectives sont dans une partie de liaison descendante active d'une cellule de planification.

6. Le procédé selon la revendication 4, dans lequel les ensembles de ressources de contrôle ayant les valeurs d'indice de groupe d'ensemble de ressources de contrôle associées aux valeurs d'indice de point d'émission/réception respectives sont dans une partie de liaison descendante active d'une cellule primaire, et dans lequel les informations de configuration exclues de l'information de contrôle de liaison descendante comprennent des informations de faisceau spatial sur une partie de bande passante de liaison montante active de la cellule primaire.

7. Le procédé selon la revendication 1, comprenant en outre :
la détermination que les informations de configuration exclues de l'information de contrôle de liaison descendante comprennent des champs d'indicateur de ressource de signal de référence de sondage associés aux valeurs d'indice de point d'émission/réception respectives,
dans lequel la sélection des ressources de signal de référence de pertes de propagation par défaut conformément à la règle de sélection de ressource comprend :
l'identification d'un mappage entre des valeurs d'identifiant de contrôle de puissance et des valeurs d'identifiant de signal de référence de pertes de propagation qui sont associées aux valeurs d'indice de point d'émission/réception respectives ; et
la sélection des ressources de signal de référence de pertes de propagation par défaut sur la base au moins en partie des valeurs d'identifiant de signal de référence de pertes de propagation et conformément au mappage.

8. Le procédé selon la revendication 1, dans lequel l'information de contrôle de liaison descendante fait partie d'un schéma d'informations de contrôle de liaison descendante multiples pour la planification de la première transmission et de la seconde transmission du signal de liaison montante.

9. Le procédé selon la revendication 1, comprenant en outre :
la détermination que les informations de configuration exclues de la signalisation de contrôle de ressource radio supplémentaire comprennent des paramètres d'autorisation configurée de liaison montante, un format de l'information de contrôle de liaison descendante activant la première transmission et la seconde transmission du signal de liaison montante, dans lequel la sélection des ressources de signal de référence de pertes de propagation par défaut conformément à la règle de sélection de ressource comprend :
l'identification d'un mappage entre des champs d'indicateur de ressource de signal de référence de sondage associés aux valeurs d'indice de point d'émission/réception respectives et des valeurs d'indicateur de signal de référence de pertes de propagation ; et
la sélection des ressources de signal de référence de pertes de propagation par défaut sur la base au moins en partie des valeurs d'identifiant de signal de référence de pertes de propagation et conformément au mappage, dans lequel les ressources de signal de référence de pertes de propagation par défaut sélectionnées comprennent des ressources d'une cellule de desserte.

10. Le procédé selon la revendication 1, comprenant en outre :
la détermination que les informations de configuration exclues de la signalisation de contrôle de ressource radio supplémentaire comprennent un ou plusieurs paramètres d'autorisation configurée de liaison montante, un format de l'information de contrôle de liaison descendante activant la première transmission et la seconde transmission du signal de liaison montante, dans lequel la sélection des ressources de signal de référence de pertes de propagation par défaut conformément à la règle de sélection de ressource comprend :
l'identification de valeurs d'identifiant de signal de référence de pertes de propagation associées aux valeurs d'indice de point d'émission/réception respectives ; et
la sélection des ressources de signal de référence de pertes de propagation par défaut sur la base au moins en partie des valeurs d'identifiant de signal de référence de pertes de propagation, dans lequel les ressources de signal de référence de pertes de propagation par défaut sélectionnées comprennent des ressources d'une cellule de desserte.

11. Un appareil pour la communication sans fil au niveau d'un équipement utilisateur, UE, comprenant :
un moyen pour identifier des valeurs d'indice de point d'émission/réception respectives correspondant à un premier point d'émission/réception et à un second point d'émission/réception, dans lequel l'UE est configuré pour transmettre au moins une première transmission d'un signal de liaison montante au premier point d'émission/réception en utilisant un premier panneau d'antenne et une seconde transmission du signal de liaison montante au second point d'émission/réception en utilisant un second panneau d'antenne différent du premier panneau d'antenne ;
un moyen pour déterminer des ressources de signal de référence de pertes de propagation par défaut pour un ou plusieurs signaux de référence de pertes de propagation associés à la première transmission et à la seconde transmission du signal de liaison montante, les ressources de signal de référence de pertes de propagation par défaut étant basées au moins en partie sur une détermination si des signaux de référence de pertes de propagation sont configurés, les valeurs d'indice de point d'émission/réception respectives et une règle de sélection de ressources ; dans lequel le moyen pour déterminer les ressources de signaux de référence de pertes de propagation par défaut comprend :
un moyen pour déterminer que les signaux de référence de pertes de propagation sont configurés via une signalisation de contrôle de ressource radio ;
un moyen pour déterminer qu'une information de contrôle de liaison descendante ou une signalisation de contrôle de ressources radio supplémentaires associée aux valeurs d'indice de point de transmission/réception respectives exclut des informations de configuration pour la transmission des un ou plusieurs signaux de référence de pertes de propagation par défaut ; et
un moyen pour sélectionner les ressources de signal de référence de pertes de propagation par défaut conformément à la règle de sélection de ressources et aux valeurs d'indice de point d'émission/réception respectives sur la base au moins en partie des signaux de référence de pertes de propagation configurés et des informations de configuration qui sont exclus ; comprenant en outre :
un moyen pour transmettre les un ou plusieurs signaux de référence de pertes de propagation en utilisant les ressources de signal de référence de pertes de propagation par défaut, dans lequel les signaux de référence de pertes de propagation sont utilisables pour déterminer les pertes de propagation d'une ou plusieurs liaisons de communication.

12. L'appareil selon la revendication 11, comprenant en outre :
des moyens pour réaliser le procédé selon l'une des revendications 2 à 10.

13. Un programme de calculateur comprenant des instructions qui,
lorsque les instructions sont exécutées par un processeur d'un appareil pour la communication sans fil au niveau d'un équipement utilisateur, amènent ledit UE à réaliser le procédé selon l'une des revendications 1 à 10.
